# EUROPEAN PATENT APPLICATION

(11) **EP 3 978 439 A1**
(43) Date of publication of application: **06.04.2022**
(21) Application number: 20813826.3
(22) Date of filing: 28.05.2020
(51) Int. Cl.: C01G 25/00, C01G 53/00, H01M 4/505, H01M 4/525

(54) **POSITIVE ELECTRODE ACTIVE MATERIAL PRECURSOR FOR LITHIUM-ION SECONDARY BATTERY, POSITIVE ELECTRODE ACTIVE MATERIAL FOR LITHIUM-ION SECONDARY BATTERY, METHOD FOR PRODUCING POSITIVE ELECTRODE ACTIVE MATERIAL PRECURSOR FOR LITHIUM-ION SECONDARY BATTERY, METHOD FOR PRODUCING POSITIVE ELECTRODE ACTIVE MATERIAL FOR LITHIUM-ION SECONDARY BATTERY, LITHIUM-ION SECONDARY BATTERY**

(30) Priority: 31.05.2019 JP 2019103126; 27.06.2019 JP 2019120374; 16.10.2019 JP 2019189540
(71) Applicant: SUMITOMO METAL MINING CO., LTD., Tokyo 105-8716 (JP)
(72) Inventor: KANEDA, Haruki, Niihama-shi, Ehime 792-0002 (JP); KOSHIKA, Yuki, Niihama-shi, Ehime 792-0002 (JP); ANDO, Takaaki, Niihama-shi, Ehime 792-0002 (JP)
(74) Representative: Jones, Nicholas Andrew
(86) International application number: PCT/JP2020/021250
(87) International publication number: WO 2020/241804

(57) **Abstract**

A positive-electrode active material precursor for lithium-ion secondary battery includes: a metal complex hydroxide particle, that includes nickel (Ni), manganese (Mn), zirconium (Zr), and an additive element M (M). When a linear analysis is performed by EDX on a cross section of the metal complex hydroxide particle along a direction of diameter from a center, a ratio of a maximum zirconium concentration to an average zirconium concentration is 2 or less.

## Description

### [Technical Field]

The present invention relates to a positive-electrode active material precursor for lithium-ion secondary battery, a positive-electrode active material for lithium-ion secondary battery, a method of manufacturing positive-electrode active material precursor for lithium-ion secondary battery, a method of manufacturing positive-electrode active material for lithium-ion secondary battery, and a lithium-ion secondary battery.

### [Background Art]

In recent years, the spread of mobile electronic devices, such as cellular phones and notebook computers, has brought strong demand for development of small and light secondary batteries having high energy density and durability. Development has also been strongly desired for high-output secondary batteries used as batteries for electric tools and electric vehicles including hybrid vehicles. In addition to the above required characteristics, there is an increasing demand for secondary batteries having high durability that does not easily deteriorate even after repeated use.

As secondary batteries that satisfy such demands, lithium-ion secondary batteries have been available. A lithium-ion secondary battery is constituted with a negative electrode, a positive electrode, an electrolyte solution, and the like; as an active material in the negative electrode and the positive electrode, materials capable of sustaining lithium insertion and disinsertion are used. The lithium-ion secondary battery have high energy density, output characteristic, and durability as described above.

Research and development have been vigorously conducted in these days for lithium-ion secondary batteries. Among these, practical use of lithium-ion secondary batteries that use lithium metal complex oxide having a layered or spinel structure as a positive electrode material is progressing, because a voltage as high as 4 V can be obtained, and hence, a high energy density can be realized.

Materials that have been proposed for the positive electrode of such a lithium-ion secondary battery include lithium-cobalt complex oxide (LiCoO₂), which is relatively easily synthesized; lithium-nickel complex oxide (LiNiO₂) in which less expensive nickel is substituted for cobalt; lithium-nickel-cobalt-manganese complex oxide (LiNi_{1/3}Co_{1/3}Mn_{1/3}O₂) ; lithium-manganese complex oxide (LiMn₂O₄) in which manganese is used; and lithium-nickel-manganese complex oxide (LiNi_{0.5}M_{n0.5}O₂).

In the lithium-ion secondary batteries, gas may be generated due to decomposition of electrolytes in the process of using the batteries. Therefore, a battery module that can discharge the gas generated inside the battery to the outside of the system has been studied.

In Patent Literature 1, for example, a battery module including a battery in which a battery element such as an electrode, an active material, and an electrolyte is enclosed and sealed by a laminate film, and a case for housing the battery. In the battery module, a case has a structure which supports a front surface of the battery or a part of the battery. The case has a protrusion, and the protrusion has a through-hole which leads from the tip to the outside of the case.

### [Citation List]

### [Patent Literature]

### [PTL 1]

Japanese Laid-Open Patent Publication No. 2003-168410

### [Summary of Invention]

### [Technical Problem]

Thus, techniques for discharging the gas generated inside the battery to the outside, by providing additional components in the battery module, have been studied. However, from the viewpoint of reducing the cost and increasing the stability of the battery, there has been a need for a positive-electrode active material precursor for a lithium-ion secondary battery that can prevent the generation of such a gas when used as a positive-electrode active material in a lithium-ion secondary battery.

Thereupon, in view of such problems found in the above conventional technologies, it is an object of an aspect of the present invention to provide a positive-electrode active material precursor for lithium-ion secondary battery that can prevent the generation of gas when used as a positive-electrode active material in a lithium-ion secondary battery.

### [Solution to Problem]

In order to solve the above problem, one aspect of the present invention is: a positive-electrode active material precursor for lithium-ion secondary battery including: a metal complex hydroxide particle, wherein the metal complex hydroxide particle includes nickel (Ni), manganese (Mn), zirconium (Zr), and an additive element M (M) in a mole ratio of Ni:Mn:Zr:M = a:b:c:d such that a, b, c, and d satisfy following conditions: 0.10 ≤ a ≤ 0.98, 0.01 ≤ b ≤ 0.50, 0.0003 ≤ c ≤ 0.02, 0.01 ≤ d ≤ 0.50, and a + b + c + d = 1, and the additive element M may be one or more elements selected from Co, W, Mo, V, Mg, Ca, Al, Ti, and Ta, and wherein when a linear analysis is performed by EDX on a cross section of the metal complex hydroxide particle along a direction of diameter from a center, a ratio of a maximum zirconium concentration to an average zirconium concentration is 2 or less.

### [Advantageous Effects of Invention]

According to one aspect of the present invention, a positive-electrode active material precursor that can prevent the generation of gas when used as a positive-electrode active material for lithium-ion secondary battery for a lithium-ion secondary battery, can be provided.

### [Brief Description of the Drawings]

[Fig. 1]

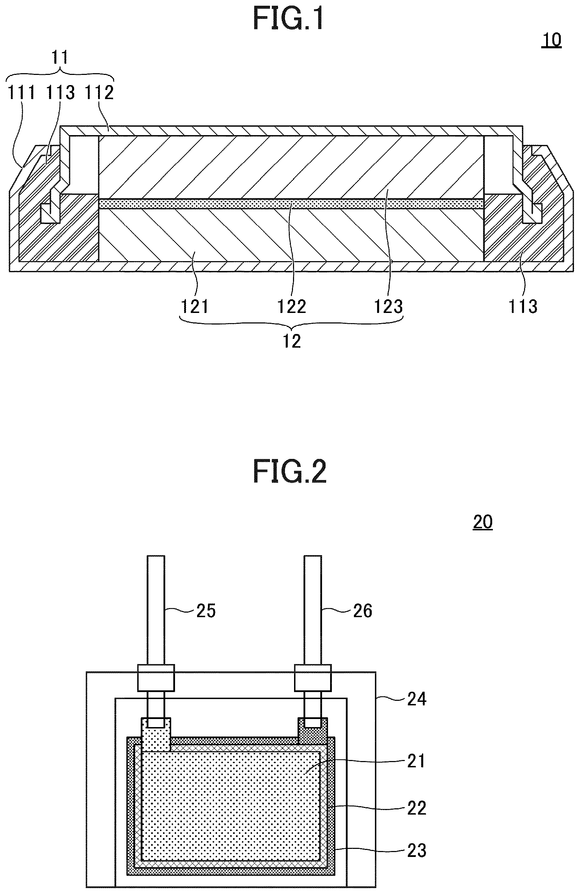

   Fig. 1 is a diagram illustrating a cross-sectional configuration of a coin battery produced according to Experimental Examples;
[Fig. 2]
   Fig. 2 is a diagram illustrating a configuration of a laminated battery produced according to Experimental Examples;
[Fig. 3]

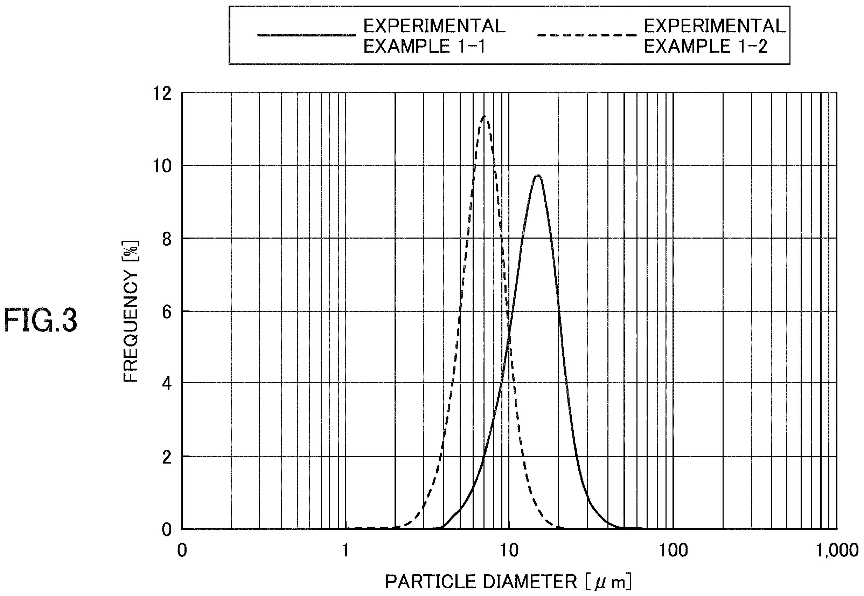

   Fig. 3 is a diagram illustrating a particle size distribution of precursors obtained in Experimental Example 1-1 and Experimental Example 1-2;
[Fig. 4A]

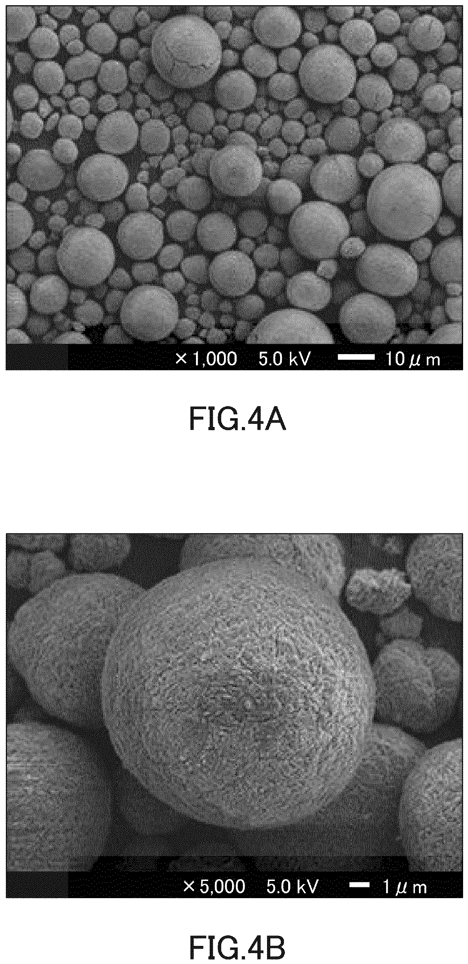

   Fig. 4A is an SEM image of a precursor obtained in Experimental Example 1-1;
[Fig. 4B]
   Fig. 4B is an SEM image of a precursor obtained in Experimental Example 1-1;
[Fig. 4C]

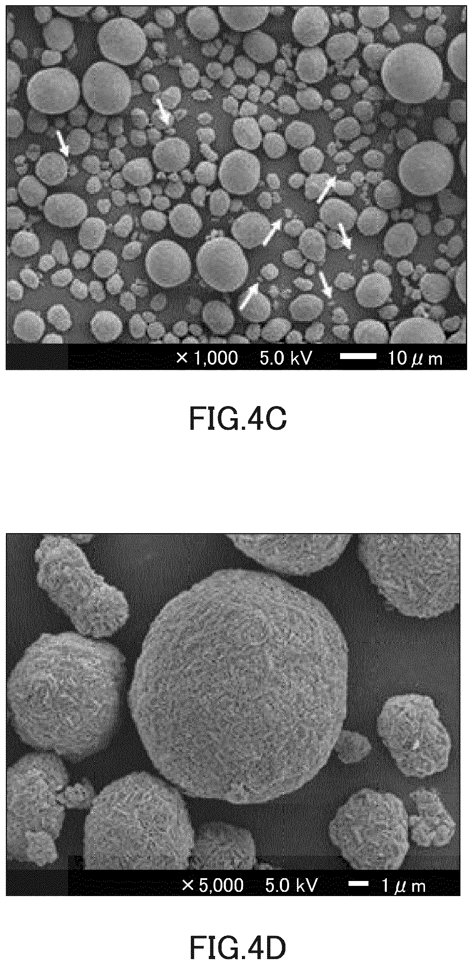

   Fig. 4C is an SEM image of a precursor obtained in Experimental Example 1-2;
[Fig. 4D]
   Fig. 4D is an SEM image of a precursor obtained in Experimental Example 1-2;
[Fig. 5A]

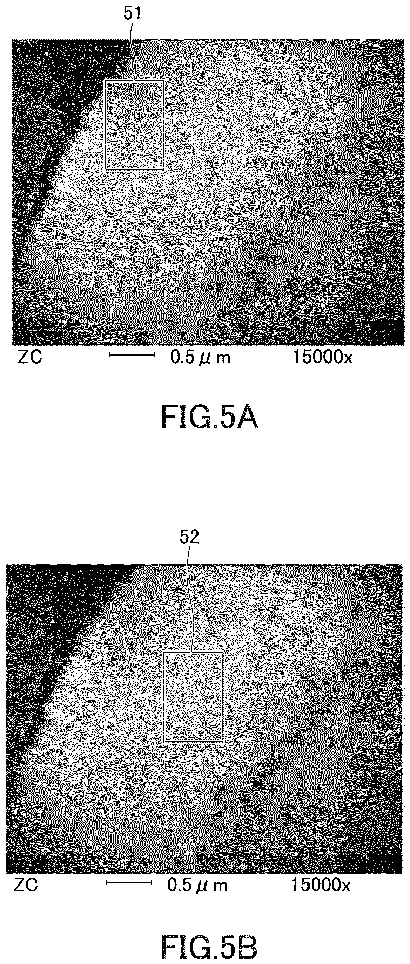

   Fig. 5A is an STEM image of the cross-section of a metal complex hydroxide particle, which is a precursor obtained in Experimental Example 1-1, indicating an EDX analysis point;
[Fig. 5B]
   Fig. 5B is an STEM image of the cross-section of a metal complex hydroxide particle, which is a precursor obtained in Experimental Example 1-1, indicating an EDX analysis point;
[Fig. 5C]

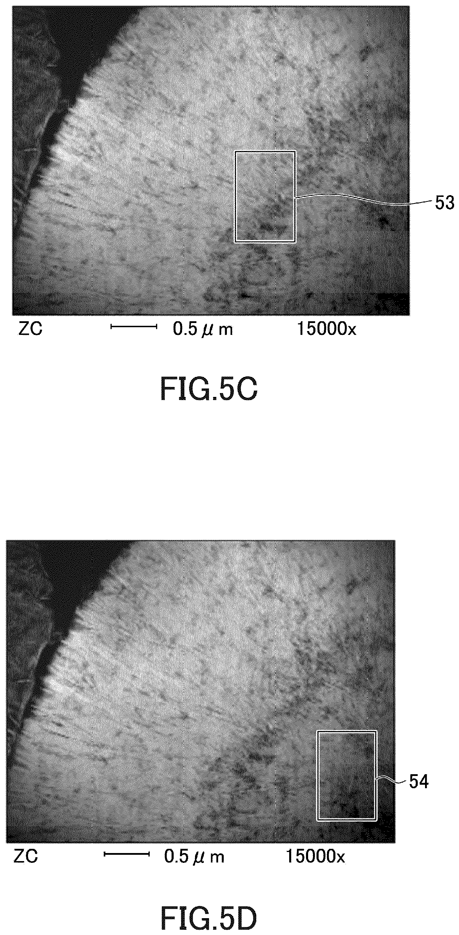

   Fig. 5C is an STEM image of the cross-section of a metal complex hydroxide particle, which is a precursor obtained in Experimental Example 1-1, indicating an EDX analysis point;
[Fig. 5D]
   Fig. 5D is an STEM image of the cross-section of a metal complex hydroxide particle, which is a precursor obtained in Experimental Example 1-1, indicating an EDX analysis point;
[Fig. 6]

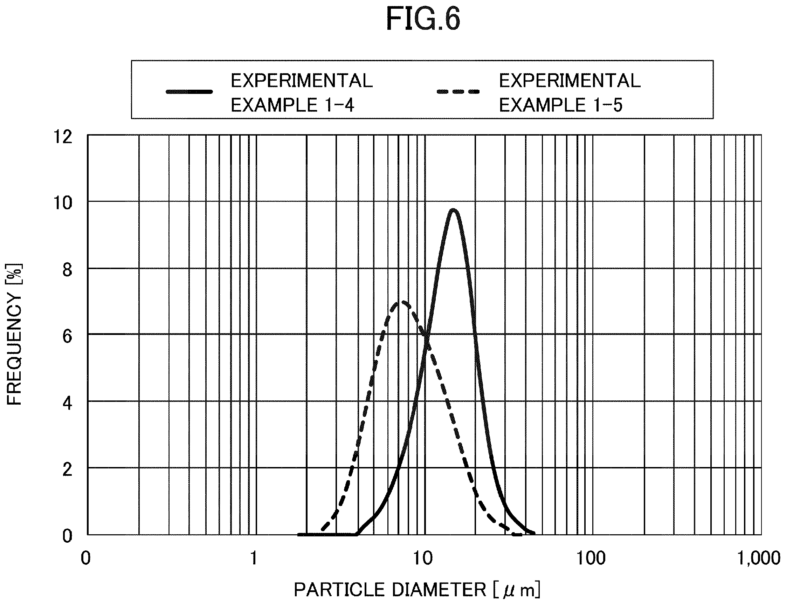

   Fig. 6 is a diagram illustrating particle size distributions of precursors obtained in Experimental Example 1-4 and Experimental Example 1-5;
[Fig. 7A]

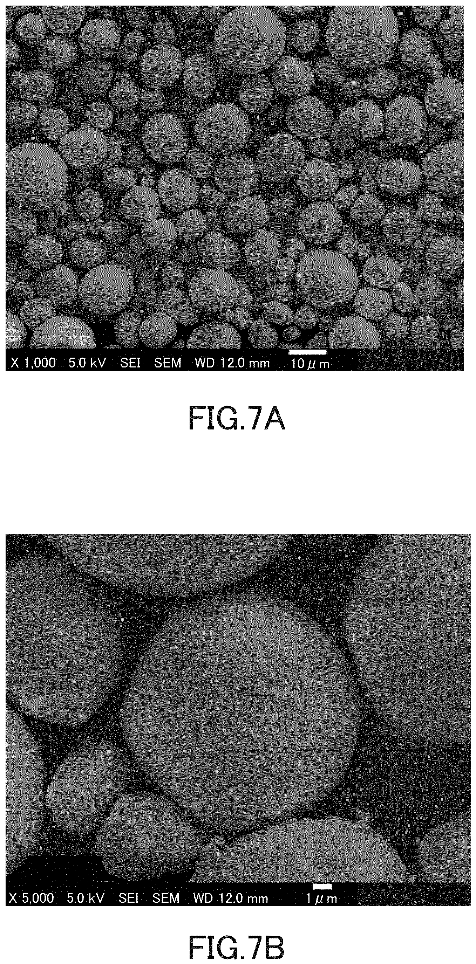

   Fig. 7A is an SEM image of a precursor obtained in Experimental Example 1-4;
[Fig. 7B]
   Fig. 7B is an SEM image of a precursor obtained in Experimental Example 1-4;
[Fig. 7C]

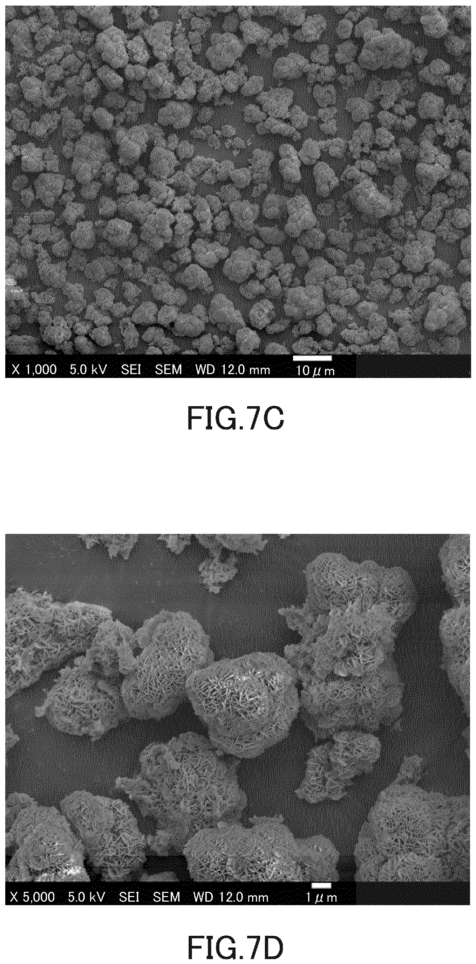

   Fig. 7C is an SEM image of a precursor obtained in Experimental Example 1-5;
[Fig. 7D]
   Fig. 7D is an SEM image of a precursor obtained in Experimental Example 1-5;
[Fig. 8A]

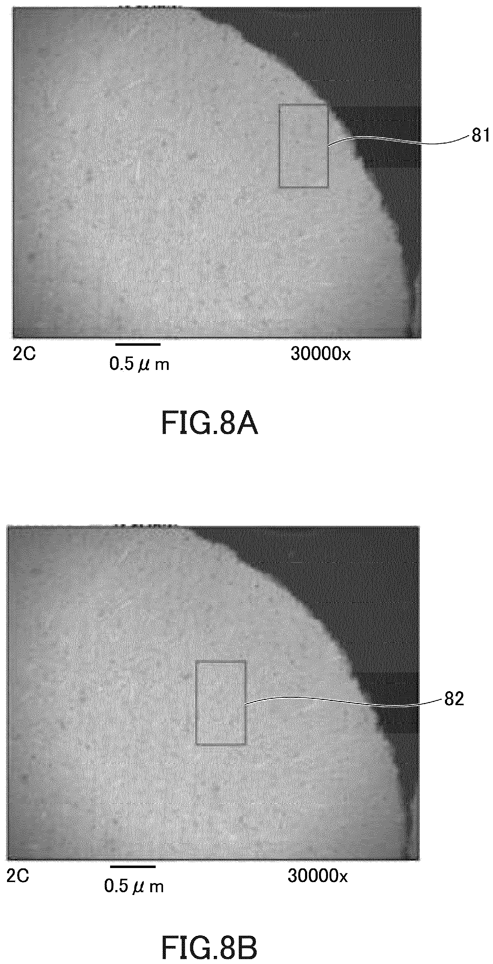

   Fig. 8A is an STEM image of the cross-section of a metal complex hydroxide particle, which is a precursor obtained in Experimental Example 1-4, indicating an EDX analysis point;
[Fig. 8B]
   Fig. 8B is an STEM image of the cross-section of a metal complex hydroxide particle, which is a precursor obtained in Experimental Example 1-4, indicating an EDX analysis point;
[Fig. 8C]

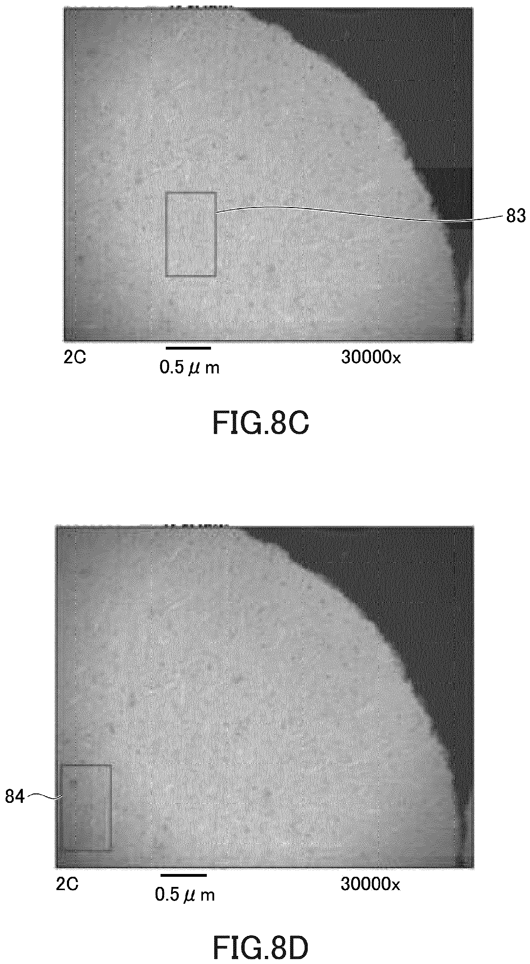

   Fig. 8C is an STEM image of the cross-section of a metal complex hydroxide particle, which is a precursor obtained in Experimental Example 1-4, indicating an EDX analysis point;
[Fig. 8D]
   Fig. 8D is an STEM image of the cross-section of a metal complex hydroxide particle, which is a precursor obtained in Experimental Example 1-4, indicating an EDX analysis point; and
[Fig. 9]

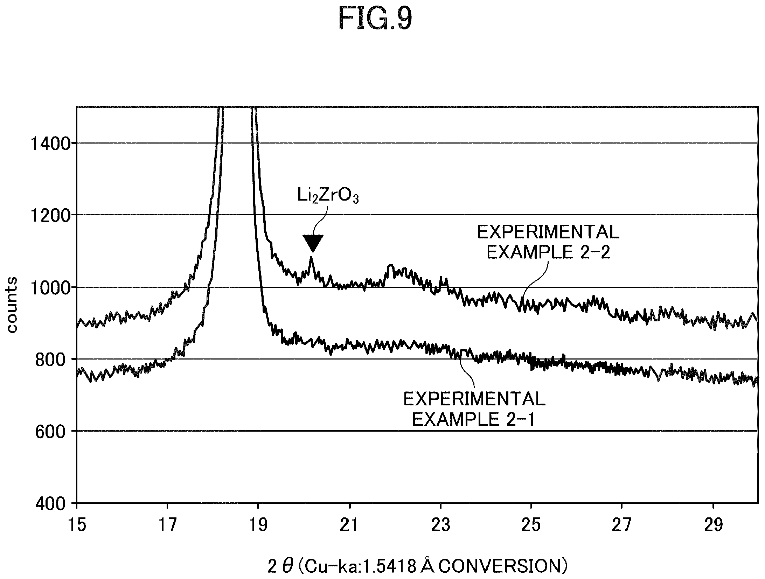

   Fig. 9 is a partially enlarged view of an XRD pattern of a positive-electrode active material obtained in Experimental Example 2-1 and Experimental Example 2-2.

### [Description of Embodiments]

In the following, embodiments of the present invention will be described with reference to the drawings. The present invention is not limited to the following embodiments, and various modifications and substitutions can be made to the following embodiments without departing from the scope of the present invention.

### [Positive-electrode active material precursor for lithium-ion secondary battery]

A positive-electrode active material precursor for lithium-ion secondary battery according to the present embodiment may include metal complex hydroxide particles.

The metal complex hydroxide particles may be particles of metal complex hydroxide including nickel (Ni), manganese (Mn), zirconium (Zr), and an additive element M (M) in a mole ratio of Ni:Mn:Zr:M = a:b:c:d. It is preferable that "a", "b", "c", and "d" satisfy the following conditions: 0.10 ≤ a ≤ 0.98, 0.01 ≤ b ≤ 0.50, 0.0003 ≤ c ≤ 0.02, 0.01 ≤ d ≤ 0.50, and a + b + c + d = 1. The additive element M may be one or more elements selected from Co, W, Mo, V, Mg, Ca, Al, Ti, and Ta.

In particular, when "a" satisfies 0.10 ≤ a < 0.70, it is preferable that "b", "c", and "d" satisfy 0.01 ≤ b ≤ 0.50, 0.0003 ≤ c ≤ 0.02, 0.01 ≤ d ≤ 0.50, and a + b + c + d = 1.

When "a" satisfies 0.70 ≤ a ≤ 0.98, it is preferable that "b", "c", and "d" satisfy 0.01 ≤ b ≤ 0.20, 0.0003 ≤ c ≤ 0.02, 0.01 ≤ d ≤ 0.20, and a + b + c + d = 1.

It is preferable that the ratio of the maximum zirconium concentration to the average zirconium concentration is 2 or less when the linear analysis is performed by EDX on the cross section of the metal complex hydroxide particle along the direction of diameter from the center.

The inventors of the present invention vigorously studied a positive-electrode active material precursor for lithium-ion secondary battery (hereinafter, simply referred to as a "precursor") that can prevent the generation of gas when used for a positive-electrode active material for lithium-ion secondary battery (hereinafter, simply referred to as a "positive-electrode active material") in a lithium-ion secondary battery. As a result, the present invention is completed by finding that the generation of gas can be prevented when the positive-electrode active material is used. The positive-electrode active material is manufactured using the precursor, which includes a particle of metal complex hydroxide including zirconium (Zr). The ratio of the maximum zirconium concentration to the average zirconium concentration is in a predetermined range when the linear analysis is performed by Energy Dispersive X-ray Spectrometry (EDX) on the cross section of the particle.

The precursor according to the present embodiment may include particles of metal complex hydroxide including nickel (Ni), manganese (Mn), zirconium (Zr), and the additive element M (M) in a mole ratio of Ni:Mn:Zr:M = a:b:c:d, as described above. The precursor according to the present embodiment may be composed of the particles of metal complex hydroxide. Even in this case, it is not excluded that the precursor contains unavoidable constituents unintentionally mixed during the manufacturing process.

The preferred composition ratio of each element and the significance of the composition ratio are the same as those of lithium complex oxide of the positive-electrode active material, which will be described later. Therefore, the description of these matters is omitted here.

A metal complex hydroxide may contain nickel, manganese, zirconium, and additive element M in a predetermined ratio as described above. The specific composition of the metal complex hydroxide is not particularly limited. The metal complex hydroxide may be represented by, for example, the general formula NiₐMn_{b}Zr_{c}M_{d}(OH)_{2+α}. It is preferable that "a", "b", "c", and "d" in the general formula respectively satisfy the above-described range. It is preferable that, for example, α satisfies -0.2 ≤ α ≤ 0.4 when 2+α indicates the content of hydroxide ions (hydroxyl groups).

The particles of metal complex hydroxide may include secondary particles in which the primary particles are agglomerated. The particles of metal complex hydroxide may be composed of the secondary particles in which the primary particles are agglomerated.

It is preferable that a maximum zirconium concentration / an average zirconium concentration, which is the ratio of the maximum zirconium concentration to the average zirconium concentration, is 2 or less when the linear analysis is performed by EDX on the cross section of the particle of metal complex hydroxide included in the precursor according to the present embodiment along the direction of diameter from the center.

Particularly, when the above-described "a", which indicates the content of nickel, satisfies 0.10 ≤ a < 0.70, it is more preferable that the maximum zirconium concentration / the average zirconium concentration is 1.5 or less, and further preferably 1.2 or less.

In addition, when the above-described "a", which indicates the content of nickel, satisfies 0.70 ≤ a ≤ 0.98, it is more preferable that the maximum zirconium concentration / the average zirconium concentration is 1.7 or less, and further preferably 1.5 or less.

According to the inventors of the present invention, in the lithium complex oxide particle included in the positive-electrode active material, zirconium is preferably dispersed in the primary particles of lithium complex oxide particles rather than present as a lithium zirconium compound such as Li₂ZrO₃, as described below. It is considered that this is because when zirconium is dispersed inside the primary particles of lithium complex oxide particles, it is possible to prevent the generation of gas in the lithium-ion secondary battery using the positive-electrode active material, and it is also possible to moderate cation mixing, which is likely to occur when it is fired at a high temperature. The cation mixing refers to the movement of a nickel atom and the like in the lithium complex oxide to a lithium site.

Although the mechanism is not clear, it is preferable that, in the precursor for obtaining the positive-electrode active material, zirconium is dispersed approximately evenly on the cross section of the particle of metal complex hydroxide included in the precursor.

Therefore, it is preferable that the metal complex hydroxide particle exhibits a lower ratio of the maximum zirconium concentration to the average zirconium concentration, when the linear analysis is performed by EDX on the cross section of the particle of metal complex hydroxide included in the precursor according to the present embodiment. Preferably, the ratio is twice or less, as described above.

The lower limit of the ratio of the maximum zirconium concentration to the average zirconium concentration when the linear analysis is performed by EDX on the cross section of the particles of metal complex hydroxide, is not particularly limited, but it is preferable that the ratio is 1, for example, since the ratio is preferably low, as described above. Note that, setting the ratio of the maximum zirconium concentration to the average zirconium concentration to 1 means that the zirconium is completely uniformly dispersed in the cross section of the particle and is usually difficult. Therefore, it is preferable that the ratio of the maximum zirconium concentration to the average zirconium concentration, when the linear analysis is performed by EDX on the cross section of the particle of metal complex hydroxide, satisfy the following range, for example.

It is preferable that the maximum zirconium concentration / average zirconium concentration is 1.02 or more when the above-described "a", which indicates the content of nickel, satisfies 0.10 ≤ a < 0.70.

It is preferable that the maximum zirconium concentration / average zirconium concentration is 1.1 or more when the above-described "a", which indicates the content of nickel, satisfies 0.70 ≤ a ≤ 0.98.

The ratio of the maximum zirconium concentration to the average zirconium concentration when the linear analysis is performed by EDX on the cross section of the particle of metal complex hydroxide may be calculated using the results of the analysis at multiple points on the line segment along the diameter direction from the center to the outer periphery of the cross section of the particle of metal complex hydroxide.

Specifically, the linear analysis is performed by EDX on the cross section of the particle of metal complex hydroxide as follows. For example, the particles of metal complex hydroxide are embedded in a resin, and the cross section of the particles are exposed by polishing and the like. An inner circle that is inscribed in the cross-sectional contour of the particle of metal complex hydroxide is drawn, and the linear analysis is performed by EDX at multiple points on the line segment drawn along any diameter direction from the center of the circle. In particular, it is preferable to evaluate the ratio of the maximum zirconium concentration to the average zirconium concentration as described above for 3 to 5 randomly selected particles of metal complex hydroxide in the viewing field. The average value of the ratios of the maximum zirconium concentration to the average zirconium concentration obtained for each particle may be the ratio of the maximum zirconium concentration to the average zirconium concentration at the cross section of the metal complex hydroxide particle included in the precursor.

The average particle diameter D50 of the precursor according to the present embodiment is preferably 8 µm or more and 20 µm or less, and more preferably 8 µm or more and 18 µm or less. By setting the average particle diameter D50 of the precursor according to the present embodiment within the above-described range, when the positive-electrode active material is prepared using the precursor according to the present embodiment, and the positive-electrode active material is used for the positive electrode of the lithium-ion secondary battery, the output characteristic and the battery capacity can be particularly improved, and also high filling property to the positive electrode can be achieved. Specifically, by setting the average particle diameter D50 of the precursor according to the present embodiment to 8 µm or more, the filling property to the positive electrode can be increased when the positive-electrode active material is prepared using the precursor. By setting the average particle diameter D50 of the precursor according to the present embodiment to 20 µm or less, the output characteristic and the battery capacity can be particularly improved when the positive-electrode active material is prepared using the precursor.

In this specification, the average particle diameter D50 refers to the particle diameter at the cumulative volume of 50% calculated from a particle size distribution obtained with a laser diffraction and scattering method.

It is preferable that, in the precursor of the present embodiment, a cumulative particle abundance of particles having a particle diameter of 5 µm or less at 10% or less of the total particles on a volume basis.

The properties of the particle of the positive-electrode active material prepared using the precursor of the present embodiment are affected by the properties of the particle of the precursor which is a raw material. By setting, in the precursor of the present embodiment, the cumulative particle abundance of particles having a particle diameter of 5 µm or less at 10% or less of the total particles on a volume basis, particles of relatively large particle diameter are obtained when the positive-electrode active material is prepared using the precursor. Thus, the packing density of the positive-electrode active material can be increased.

The cumulative particle abundance of particles having a particle diameter of 5 µm or less on a volume basis represents the proportion of the particles having a relatively small particle diameter included in the precursor of the present embodiment. The lower limit of the cumulative particle abundance is not particularly limited. The average particle diameter D50 of the precursor of the present embodiment is preferably 8 µm or more and 20 µm or less, as described above. Therefore, the cumulative particle abundance of particles having a particle diameter of 5 µm or less on a volume basis of the precursor of the present embodiment may be 0% of that of the total particles. Thus, the cumulative particle abundance of particles having a particle diameter of 5 µm or less on a volume basis of the precursor of the present embodiment may be 0% or more of that of the total particles.

### [Positive-electrode active material for lithium-ion secondary battery]

Next, a positive-electrode active material for lithium-ion secondary battery according to the present embodiment will be described.

### (1) Overview of positive-electrode active material for lithium-ion secondary battery according to present embodiment

The positive-electrode active material for lithium-ion secondary battery according to the present embodiment may include a lithium complex oxide particle.

The lithium complex oxide particle includes lithium (Li), nickel (Ni), manganese (Mn), zirconium (Zr), and an additive element M (M) in a mole ratio of Li:Ni:Mn:Zr:M = x:a:b:c:d.

### (1-1) When "a" indicating content of nickel satisfies 0.10 ≤ a < 0.70

It is preferable that "x", "a", "b", "c", and "d" described above satisfy the following conditions: 0.95 ≤ x ≤ 1.20, 0.10 ≤ a < 0.70, 0.01 ≤ b ≤ 0.50, 0.0003 ≤ c ≤ 0.02, 0.01 ≤ d ≤ 0.50, and a + b + c + d = 1, and the additive element M may be one or more elements selected from Co, W, Mo, V, Mg, Ca, Al, Ti, and Ta.

In the XRD measurement of lithium complex oxide particles, it is preferable that a ratio (I₂ / I₁) of an integrated intensity (I₂) of the diffraction peak of Li₂ZrO₃ to an integrated intensity (I₁) of a (003) diffraction peak of a hexagonal layered structure is 0.015 or less.

### (1-2) When "a" indicating content of nickel satisfies 0.70 ≤ a ≤ 0.98

It is preferable that "x", "a", "b", "c", and "d" described above satisfy the following conditions: 0.95 ≤ x ≤ 1.20, 0.70 ≤ a ≤ 0.98, 0.01 ≤ b ≤ 0.20, 0.0003 ≤ c ≤ 0.02, 0.01 ≤ d ≤ 0.20, and a + b + c + d = 1, and the additive element M may be one or more elements selected from Co, W, Mo, V, Mg, Ca, Al, Ti, and Ta.

In the XRD measurement of lithium complex oxide particles, it is preferable that the ratio (I₂ / I₁) of the integrated intensity (I₂) of the diffraction peak of Li₂ZrO₃ to the integrated intensity (I₁) of the (003) diffraction peak of the hexagonal layered structure is 0.010 or less.

The inventors of the present invention vigorously studied a positive-electrode active material that can prevent the generation of gas when used for a lithium-ion secondary battery. As a result, the present invention is completed by finding that the generation of gas can be prevented when the positive-electrode active material is used. The positive-electrode active material includes lithium complex oxide particles supplemented with zirconium (Zr), and the zirconium is solidly dissolved in the lithium complex oxide.

### (2) Composition

The positive-electrode active material according to the present embodiment may include particles of lithium complex oxide including lithium (Li), nickel (Ni), manganese (Mn), zirconium (Zr), and the additive element M (M) in a mole ratio of Li:Ni:Mn:Zr:M = x:a:b:c:d, as described above. The positive-electrode active material according to the present embodiment may be composed of the particles of lithium complex oxide. Even in this case, it is not excluded that the positive-electrode active material contains unavoidable constituents unintentionally mixed in a manufacturing process.

### (2-1) When "a" indicating content of nickel satisfies 0.10 ≤ a < 0.70

It is preferable that "x", which indicates the content of lithium in the lithium complex oxide, satisfies the following condition: 0.95 ≤ x ≤ 1.20, and more preferably, 1.00 ≤ x ≤ 1.15.

It is preferable that "a", which indicates the content of nickel in the lithium complex oxide, satisfies the following condition: 0.10 ≤ a < 0.70, and more preferably, 0.30 ≤ a ≤ 0.68. By setting the value of "a" within the above-described range, when a positive-electrode active material containing the particles of such lithium complex oxide is used for a lithium-ion secondary battery, a high battery capacity is obtained.

It is preferable that "b", which indicates the content of manganese in the lithium complex oxide, satisfies the following condition: 0.01 ≤ b ≤ 0.50, and more preferably, 0.03 ≤ b ≤ 0.35. By setting the value of "b" within the above-described range, when a positive-electrode active material containing the particles of such lithium complex oxide is used for a lithium-ion secondary battery, excellent durability, a high battery capacity, and even higher stability can be obtained.

It is preferable that "c", which indicates the content of zirconium in the lithium complex oxide, satisfies the following condition: 0.0003 ≤ c ≤ 0.02, and more preferably, 0.001 ≤ c ≤ 0.01. By setting the value of "c" within the above-described range, when a positive-electrode active material containing the particles of such lithium complex oxide is used for a lithium-ion secondary battery, the generation of gas can be prevented.

It is considered that this is because, when the lithium complex oxide contains zirconium within the above-described range, the structure of the lithium complex oxide is stabilized, and occurrence of an excess lithium (eluted lithium) is suppressed, thereby the generation of gas due to the reaction between an electrolyte and the excess lithium is prevented. It is considered that the structural stabilization described above of the lithium complex oxide when the lithium complex oxide contains zirconium, is because the zirconium contained is solidly dissolved so that the cation mixing is moderated. The cation mixing means that a nickel atom and the like in the lithium complex oxide moves to the lithium site, as described above.

In addition, when a positive-electrode active material containing particles of a lithium complex oxide having a zirconium content within the above-described range is used for a lithium-ion secondary battery, the structure of the lithium complex oxide is stabilized as described above, and thus the cycle characteristic can be improved.

It is preferable that "d", which indicates the content of the additive element M in the lithium complex oxide, satisfies the following condition: 0.01 ≤ d ≤ 0.50, and more preferably, 0.03 ≤ d ≤ 0.35. By including the additive element M, when a positive-electrode active material containing the particles of such lithium complex oxide is used for a lithium-ion secondary battery, the cycle characteristic and the output characteristic can be further improved.

The description of the elements that may be preferably used as the additive element M is omitted here, because it has been described previously.

### (2-2) When "a" indicating content of nickel satisfies 0.70 ≤ a ≤ 0.98

It is preferable that "x", which indicates the content of lithium in the lithium complex oxide, satisfies the following condition: 0.95 ≤ x ≤ 1.20, and more preferably, 1.00 ≤ x ≤ 1.15.

It is preferable that "a", which indicates the content of nickel in the lithium complex oxide, satisfies the following condition: 0.70 ≤ a ≤ 0.98, and more preferably, 0.70 ≤ a ≤ 0.95. By setting the value of "a" within the above-described range, when a positive-electrode active material containing the particles of such lithium complex oxide is used for a lithium-ion secondary battery, a high battery capacity is obtained.

It is preferable that "b", which indicates the content of manganese in the lithium complex oxide, satisfies the following condition: 0.01 ≤ b ≤ 0.20, and more preferably, 0.02 ≤ b ≤ 0.15. By setting the value of "b" within the above-described range, when a positive-electrode active material containing the particles of such lithium complex oxide is used for a lithium-ion secondary battery, excellent durability, a high battery capacity, and even higher stability can be obtained.

It is preferable that "c", which indicates the content of zirconium in the lithium complex oxide, satisfies the following condition: 0.0003 ≤ c ≤ 0.02, and more preferably, 0.001 ≤ c ≤ 0.01. By setting the value of "c" within the above-described range, when a positive-electrode active material containing the particles of such lithium complex oxide is used for a lithium-ion secondary battery, the generation of gas can be prevented.

It is considered that this is because, when the lithium complex oxide contains zirconium within the above-described range, the structure of the lithium complex oxide is stabilized, and occurrence of an excess lithium (eluted lithium) is suppressed, thereby the generation of gas due to the reaction between an electrolyte and the excess lithium is prevented. It is considered that the structural stabilization described above of the lithium complex oxide when the lithium complex oxide contains zirconium, is because the zirconium contained is solidly dissolved so that the cation mixing is moderated. The cation mixing means that a nickel atom and the like in the lithium complex oxide moves to the lithium site, as described above.

In addition, when a positive-electrode active material which includes particles of the lithium complex oxide having a zirconium content within the above-described range is used for a lithium-ion secondary battery, the structure of the lithium complex oxide is stabilized as described above, and thus the cycle characteristic can be improved.

It is preferable that "d", which indicates the content of the additive element M in the lithium complex oxide, satisfies the following condition: 0.01 ≤ d ≤ 0.20, and more preferably, 0.02 ≤ d ≤ 0.15. By including the additive element M, when a positive-electrode active material containing the particles of such lithium complex oxide is used for a lithium-ion secondary battery, the cycle characteristic and the output characteristic can be further improved.

The description of the elements that may be preferably used as the additive element M is omitted here, because it has been described previously.

The lithium complex oxide included in the positive-electrode active material according to the present embodiment, which is described above, may include lithium, nickel, manganese, zirconium, and the additive element M in a predetermined ratio as described above. The specific composition of the lithium complex oxide may be represented by the general formula LiₓNiₐMn_{b}Zr_{c}M_{d}O_{2+β}, for example, although it is not particularly limited. It is preferable that "x", "a", "b", "c", and "d" in the general formula respectively satisfy the above-described range. In addition, it is preferable that, regarding 2+β indicating the content of oxygen, β satisfies -0.2 ≤ β ≤ 0.2, for example.

### (3) Zirconium

As described above, it is preferable that the zirconium is solidly dissolved in the lithium complex oxide particles included in the positive-electrode active material according to the present embodiment. It is confirmed that the zirconium is solidly dissolved in the lithium complex oxide particles included in the positive-electrode active material according to the present embodiment by XRD (X-ray diffraction) measurement.

A typical compound of lithium and zirconium is Li₂ZrO₃. When Zr is determined to be included in lithium complex oxide particles by an analysis such as ICP (inductively coupled plasma emission spectrometry), and Li₂ZrO₃ is not detected by XRD measurement of lithium complex oxide particles, or the peak of Li₂ZrO₃ detected is extremely weak, it can be said that Zr is solidly dissolved in the lithium complex oxide particles.

Specifically, in the XRD measurement using CuK_{α} ray of lithium complex oxide particles included in the positive-electrode active material according to the present embodiment, it is preferable that the ratio (I₂ / I₁) (hereinafter, referred to as "peak intensity ratio") of the integrated intensity (I₂) of the diffraction peak of the (110) plane of Li₂ZrO₃ to the integrated intensity (I₁) of the diffraction peak of the (003) plane of the hexagonal layered structure, is within a predetermined range.

Specifically, when "a", which indicates the content of nickel, satisfies 0.10 ≤ a < 0.70, it is preferable that the peak intensity ratio is 0 or more and 0.015 or less. When the peak intensity ratio is 0.015 or less, it can be said that Li₂ZrO₃ is not detected by the XRD measurement of lithium complex oxide particles, or the peak of Li₂ZrO₃ detected is extremely weak. When, in addition, Zr is detected by ICP and the like, it can be said that Zr is solidly dissolved in the lithium complex oxide particles, as described above.

When the diffraction peak of Li₂ZrO₃ is the detection limit or less, the integrated intensity is set to 0 (zero). If the peak intensity ratio exceeds 0.015, when the above-described "a", which indicates the content of nickel, is within the above-described range, the battery characteristics may be reduced because Li₂ZrO₃ precipitates a certain amount or more.

When the above-described "a", which indicates the content of nickel, satisfies 0.70 ≤ a < 0.98, it is preferable that the peak intensity ratio described above is 0 or more and 0.010 or less. When the peak intensity ratio described above is 0.010 or less, it can be said that Li₂ZrO₃ is not detected by the XRD measurement of lithium complex oxide particles, or the peak of Li₂ZrO₃ detected is extremely weak. When, in addition, Zr is detected by ICP and the like, it can be said that Zr is solidly dissolved in the lithium complex oxide particles, as described above.

When the diffraction peak of Li₂ZrO₃ is the detection limit or less, the integrated intensity is set to 0 (zero). If the peak intensity ratio exceeds 0.010, when the above-described "a", which indicates the content of nickel, is within the above-described range, the battery characteristics may be reduced because Li₂ZrO₃ precipitates a certain amount or more.

### (4) Average particle diameter and variation amount in particle diameter

The particles of lithium complex oxide included in the positive-electrode active material may include secondary particles in which the primary particles are agglomerated. The particles of lithium complex oxide may be composed of the secondary particles in which the primary particles are agglomerated.

The average particle diameter D50 of the positive-electrode active material according to the present embodiment is preferably 8 µm or more and 20 µm or less, and more preferably 10 µm or more and 18 µm or less. By setting the average particle diameter D50 of the positive-electrode active material according to the present embodiment within the above-described range, when the positive-electrode active material is used for a positive electrode of a lithium-ion secondary battery, the output characteristic and the battery capacity can be particularly improved, and also high filling property to the positive electrode can be achieved. Specifically, by setting the average particle diameter D50 of the positive-electrode active material according to the present embodiment to 8 µm or more, the filling property to the positive electrode can be increased. By setting the average particle diameter D50 of the positive-electrode active material according to the present embodiment to 20 µm or less, the output characteristic and the battery capacity can be particularly improved.

It is preferable that, in relation to the positive-electrode active material according to the present embodiment, the evaluated value of the formula : [(D90 - D10) / average particle diameter D50], which represents the spread of the particle size distribution (hereinafter also referred to as the "variation amount in particle diameter"), is 0.7 or more and 1.2 or less.

By setting the variation amount in particle diameter of the positive-electrode active material to 0.7 or more, for example, when producing the positive electrode, particles with a relatively small particle diameter are placed among particles with a relatively large particle diameter. Thus, the packing density of the positive-electrode active material can be increased.

The upper limit of the variation amount in particle diameter of the positive-electrode active material is not particularly limited, but it is preferably 1.2 or less.

By setting the variation amount in particle diameter to 1.2 or less, it is possible to prevent the inclusion of excessively coarse particles or small particles. Thus, the output characteristic can be particularly enhanced when such positive-electrode active material is used for a lithium-ion secondary battery.

As used herein, D10 is a cumulative 10% particle diameter, which means the particle diameter at a cumulative volume of 10% in the particle size distribution determined by the laser diffraction / scattering method.

As used herein, D90 is a cumulative 90% particle diameter, which means the particle diameter at a cumulative volume of 90% in the particle size distribution determined by the laser diffraction / scattering method. In other parts of the specification, D10, and D90 may have the same meaning.

### (5) Specific surface area

It is preferable that the specific surface area measured by the BET method of the positive-electrode active material according to the present embodiment is 0.1 m²/g or more and 0.5 m²/g or less.

It is preferable that the specific surface area of the positive-electrode active material according to the present embodiment is within the above-described range, so that the output characteristic and the stability can be particularly increased.

Specifically, by setting the specific surface area of the positive-electrode active material to 0.5 m²/g or less, it is possible to increase the packing density and increase the energy density of the positive-electrode active material when producing the positive electrode. Furthermore, by setting the specific surface area to 0.5 m²/g or less, the amount of the excess lithium present on the surface of the particles can be particularly reduced, and thus the reaction between the electrolyte and the like and the excess lithium can be prevented. Therefore, generation of various gases such as carbon dioxide, hydrogen carbonate, and carbon monoxide during the charge-discharge reaction can be particularly suppressed, and expansion of the cell can be prevented. Furthermore, because the excess lithium amount can be reduced, the slurry containing the positive-electrode active material is less likely to turn into a gel when an electrode plate is manufactured. Thus, advantages can be obtained such as reducing the defect in manufacturing the positive electrode, that is, the improvement of the yield in the manufacturing process.

When the specific surface area of the positive-electrode active material is set to 0.1 m²/g or more, contact area with the electrolyte can be increased, and the positive electrode resistance can be reduced. Therefore, the output characteristic can be particularly enhanced.

### (6) Amount of eluted lithium

It is preferable that the amount of eluted lithium determined by the Warder method of the positive-electrode active material of the present embodiment falls within a predetermined range.

Specifically, when the above-described "a" which indicates the content of nickel, satisfies 0.10 ≤ a < 0.70, the amount of the eluted lithium is preferably 0.06% by mass or less, and more preferably 0.05% by mass or less. By setting the amount of the eluted lithium to 0.06% by mass or less, the reaction between the electrolyte and the like and the excess lithium can be prevented when the positive-electrode active material according to the present embodiment is used in a lithium-ion secondary battery. Therefore, the generation of various gases such as carbon dioxide, hydrogen carbonate, and carbon monoxide during the charge-discharge reaction can be particularly suppressed, and expansion of the cell can be prevented.

In addition, by setting the above-described amount of the eluted lithium to 0.06% by mass or less, the slurry containing the positive-electrode active material is less likely to turn into a gel when an electrode plate is manufactured. Thus, advantages can be obtained such as reducing the occurrence of defects in manufacturing the positive electrode, that is, the yield of the manufacturing process can be improved.

When the above-described "a", which indicates the content of nickel, satisfies 0.70 ≤ a ≤ 0.98, it is preferable that the amount of the eluted lithium is 0.11% by mass or less, and more preferably 0.10% by mass or less. By setting the amount of the eluted lithium to 0.11% by mass or less, the reaction between the electrolyte and the like and the excess lithium can be prevented when the positive-electrode active material according to the present embodiment is used in a lithium-ion secondary battery. Therefore, the generation of various gases such as carbon dioxide, hydrogen carbonate, and carbon monoxide during the charge-discharge reaction can be particularly suppressed, and expansion of the cell can be prevented.

In addition, by setting the amount of the eluted lithium to 0.11% by mass or less, the slurry containing the positive-electrode active material is less likely to turn into a gel when an electrode plate is manufactured. Thus, advantages can be obtained such as reducing the defect in manufacturing the positive electrode, that is, the improvement of the yield in the manufacturing process.

The amount of the eluted lithium may be determined by the Warder method as described above. Specifically, the amount of the eluted lithium may be determined by, for example, adding pure water to the positive electrode active material, stirring for a specified period of time, and then calculating the amount of lithium by performing neutralization titration on the filtrate. The amount of the eluted lithium may be calculated in the following manner. A state of compound of the eluted lithium is evaluated from the neutralization point which appears by adding hydrochloric acid while measuring the pH of the filtrate. The amount of lithium hydroxide (LiOH) and lithium carbonate (Li₂CO₃) is calculated, and then these amounts of lithium may be summed as the amount of the eluted lithium.

The amount of the eluted lithium represents the proportion, in the positive electrode active material, of the excess lithium adhering to the surface and the like of the particles of the lithium complex oxide included in the positive electrode active material according to the present embodiment.

It is preferable that the amount of the eluted lithium in the positive electrode active material according to the present embodiment is smaller. The lower limit value is not particularly limited. Note that, when the amount of the eluted lithium is reduced excessively, the lithium content inside the particles may be decreased, and the battery characteristics may be reduced. Therefore, it is preferable that the amount of the eluted lithium of the positive electrode active material according to the present embodiment is 0.01% by mass or more.

### (7) Oil absorption amount

The positive electrode active material according to the present embodiment preferably has an oil absorption amount within a predetermined range.

In particular, when "a", which indicates the content of nickel, satisfies 0.10 ≤ a < 0.70, it is preferable that the oil absorption amount is 13 ml/100g or more and 19 ml/100g or less, and more preferably 14 ml/100g or more and 18 ml/100g or less.

When "a", which indicates the content of nickel, satisfies 0.70 ≤ a ≤ 0.98, it is preferable that the oil absorption amount is 15 ml/100g or more and 21 ml/100g or less, and more preferably 16 ml/100g or more and 20 ml/100g or less.

By setting the oil absorption amount within the above-described range, the filling property when manufacturing the electrode plate is excellent, and the electrode with a high energy density can be obtained. Thus, the output characteristics are increased when the positive electrode active material is used for a lithium-ion secondary battery.

As used herein, the expression "oil absorption amount" means DBP absorption amount measured in accordance with JIS K6217-4:2008.

### [Method of manufacturing positive-electrode active material precursor for lithium-ion secondary battery]

Next, an example configuration of a method of manufacturing positive-electrode active material precursor for lithium-ion secondary battery according to the embodiment (hereinafter, also referred to as a "method of manufacturing a precursor") will be described.

According to a method of manufacturing a precursor of the present embodiment, the precursor described above may be manufactured. The description of certain features will be omitted to avoid redundant description.

The method of manufacturing a precursor according to the present embodiment relates to a method of manufacturing a positive-electrode active material precursor for lithium-ion secondary battery which includes a metal complex hydroxide particle. The method of manufacturing a precursor according to the present embodiment include the processes described below.

A crystallization process in which a particle of metal complex hydroxide including nickel (Ni), manganese (Mn), zirconium (Zr), and additive element M (M) in a mole ratio of Ni:Mn:Zr:M = a:b:c:d are crystallized by a crystallization method.

In the above-described formula, "a", "b", "c", and "d" satisfy the following conditions: 0.10 ≤a ≤ 0.98, 0.01 ≤ b ≤ 0.50, 0.0003 ≤ c ≤ 0.02, 0.01 ≤ d ≤ 0.50, and a + b + c + d = 1. The additive element M may be one or more elements selected from Co, W, Mo, V, Mg, Ca, Al, Ti, and Ta.

In particular, when "a", which indicates the content of nickel, satisfies 0.10 ≤ a < 0.70, it is preferable that "a", "b", "c", and "d" satisfy 0.10 ≤a < 0.70, 0.01 ≤ b ≤ 0.50, 0.0003 ≤ c ≤ 0.02, 0.01 ≤ d ≤ 0.50, and a + b + c + d = 1. The additive element M may be one or more elements selected from Co, W, Mo, V, Mg, Ca, Al, Ti, and Ta.

When "a", which indicates the content of nickel, satisfies 0.70 ≤ a ≤ 0.98, it is preferable that "a", "b", "c", and "d" satisfy 0.70 ≤ a ≤ 0.98, 0.01 ≤ b ≤ 0.20, 0.0003 ≤ c ≤ 0.02, 0.01 ≤ d ≤ 0.20, and a + b + c + d = 1. The additive element M may be one or more elements selected from Co, W, Mo, V, Mg, Ca, Al, Ti, and Ta.

It is preferable that the aqueous solution containing zirconium salt used to supply zirconium in the crystallization process has a pH of less than 1.

The crystallization process will be described below.

In the crystallization process, a particle of a metal complex hydroxide that includes nickel, manganese, zirconium, and the additive element M may be crystallized.

The specific procedure of the crystallization process is not particularly limited. For example, a mixed aqueous solution containing nickel (Ni), manganese (Mn), zirconium (Zr), and an additive element M may be mixed with an alkaline aqueous solution to allow crystallization of a particle of a metal complex hydroxide. Specifically, for example, it is preferable to perform the crystallization process according to the following procedure.

Water is put into a reactor, and the atmosphere and temperature are controlled to a predetermined level. A mixed aqueous solution containing at least nickel, manganese, zirconium, and an additive element M and an alkaline aqueous solution are added to the reactor to prepare a reaction aqueous solution. By stirring the reaction aqueous solution at a constant rate and controlling pH, particles of the metal complex hydroxide may be co-precipitated and crystallized in the reactor.

Instead of using the mixed aqueous solution containing nickel, manganese, zirconium, and an additive element M, it is possible to supply to the reactor a mixed aqueous solution that contains a part of the metals and another solution that contains the rest of the metals. Specifically, a mixed aqueous solution containing, for example, nickel, manganese, and zirconium and an aqueous solution containing the additive element M may be supplied. Aqueous solutions of each metal may be prepared separately, and the aqueous solutions containing each metal may be supplied to the reactor.

The mixed aqueous solution containing nickel, manganese, zirconium and the additive element M may be prepared by adding salts of each metal to the water which is a solvent. Acid or the like may also be added to the mixed aqueous solution, so that the salts of each metal may be dissolved, and for adjusting the pH. The salts are not particularly limited. As the salts for nickel, manganese, and zirconium, for example, one or more salts selected from sulfate, nitrate, and chloride may be used. The salts of each metal may be different. It is preferable that the salts are the same from the viewpoint of preventing impurity contamination.

As the salt that contains the additive element M, one or more salts selected from cobalt sulfate, cobalt chloride, titanium sulfate, tungsten oxide, molybdenum oxide, molybdenum sulfide, vanadium pentoxide, calcium chloride, aluminum sulfate, sodium aluminate, and the like may be used, for example.

Preferably, a pH of the aqueous solution containing at least a zirconium salt is less than 1, and more preferably 0.9 or less, and even more preferably 0.8 or less. As described above, the aqueous solution containing at least a zirconium salt may be an aqueous solution containing only a zirconium salt or a mixed aqueous solution further containing a nickel salt and the like. When the aqueous solution containing only a zirconium salt is used, it is preferable to set the pH of the aqueous solution within the above range. When the mixed aqueous solution further containing a nickel salt and the like in addition to the zirconium salt is used, it is preferable to set the pH of the mixed aqueous solution within the above range. In this specification, unless otherwise indicated, "pH" means that of at a reference temperature of 25°C.

Zirconium is in an ionic state such as Zr⁴⁺ in a strong acid, but the solubility decreases as the pH increases, and hydroxides and the like begin to precipitate when the pH becomes 1 or more. This precipitate serves as the starting point for the formation of the metal complex hydroxide particle, and thus causes a generation of fine powder and a resulting reduction in the diameter of the metal complex hydroxide particle. By setting the pH of the aqueous solution containing the zirconium salt to less than 1, as described above, precipitation of hydroxide and the like in the aqueous solution containing the zirconium salt as a material is prevented, and the zirconium component may be uniformly dispersed when the aqueous solution is added to the reaction aqueous solution. Therefore, zirconium may be uniformly dispersed and solidly dissolved in the particle of the metal complex hydroxide obtained by crystallization.

The lower limit of the pH of the aqueous solution containing the zirconium salt is not particularly limited. The lower limit is substantially approximately 0 so as not to excessively increase the amount of acid used to adjust the pH. That is, the pH of the aqueous solution containing the zirconium salt may be greater than 0.

In preparing the mixed aqueous solution or the aqueous solutions of each metal, the salt is dissolved by using water and, if necessary, an acid. As the acid, it is preferable to use an inorganic acid, and more preferably, the same kind of acid as used for the salts of each metal. For example, sulfuric acid in the case of sulfate.

An alkaline aqueous solution may be prepared by adding an alkaline component to the water as a solvent. The alkaline component is not particularly limited. For example, one or more alkaline components selected from sodium hydroxide, potassium hydroxide, sodium carbonate, and the like may be used.

The composition of metal elements contained in the mixed aqueous solution and the composition of metal elements contained in the obtained metal complex hydroxide are almost the same. Accordingly, it is preferable to adjust the composition of the metal elements of the mixed aqueous solution to be the same as the composition of the metal elements of the desired metal complex hydroxide.

In the crystallization process, as well as the aqueous solution (the mixed aqueous solution) containing the metal component and the alkaline aqueous solution, any other components may be added to the reaction aqueous solution.

For example, a complexing agent may be added to the reaction aqueous solution in conjunction with the alkaline aqueous solution.

The complexing agent is not particularly limited. The complexing agent may be one capable of forming a complex by binding nickel ions or other metal ions in the aqueous solution. Examples of the complexing agent include an ammonium ion donor. As the ammonium ion donor, for example, one or more substances selected from ammonia, ammonium sulfate, ammonium chloride, ammonium carbonate, ammonium fluoride, and the like may be used, although not particularly limited.

The temperature of the reaction aqueous solution in the crystallization process and the pH are not particularly limited. For example, when the complexing agent is not used, it is preferable that the temperature of the reaction aqueous solution is within the range of over 60 °C to 80 °C or less, and the pH of the reaction aqueous solution is 10 or more and 12 or less at a reference temperature of 25°C.

In the crystallization process, when the complexing agent is not used, by setting the pH of the reaction aqueous solution to 12 or less, it is possible to prevent the particle of the metal complex hydroxide from becoming a fine particle, and to increase the filterability. In addition, a spherical particle can be obtained.

By setting the pH of the reaction aqueous solution to 10 or more, the rate of formation of the particle of the metal complex hydroxide can be accelerated, and it is possible to prevent some components, such as nickel, from remaining in the filtrate. Thus, a particle of metal complex hydroxide with a desired composition can be obtained more reliably.

In the crystallization process, when the complexing agent is not used, by setting the temperature of the reaction aqueous solution to over 60°C, the solubility of nickel is increased. Thus, a deviation of a precipitation amount of nickel from a target composition, which may cause non-occurrence of co-precipitation, can be prevented more certainly.

By setting the temperature of the reaction aqueous solution to 80°C or less, the amount of water that is evaporated can be reduced, and it is possible to prevent the concentration of the slurry from becoming too high. By preventing the slurry concentration from becoming high, it is possible to prevent the unintentional precipitation of sodium sulfate crystals and the like in the reaction aqueous solution, which may result in a higher concentration of impurities, for example.

When the ammonium ion donor such as ammonia is used as the complexing agent, the solubility of Ni is increased. Therefore, in the crystallization process, it is preferable that the pH of the reaction aqueous solution is 10 or more and 13 or less. Also, in this case, it is preferable that the temperature of the reaction aqueous solution is 30°C or more and 60°C or less.

When the ammonium ion donor is added to the reaction aqueous solution as the complexing agent, it is preferable that the ammonia concentration in the reaction aqueous solution is maintained within a certain range at 3 g/l or more and 25 g/l or less in the reactor.

By setting the ammonia concentration in the reaction aqueous solution to 3 g/l or more, the solubility of the metal ion can be kept particularly constant, and it is possible to form a primary particle of the metal complex hydroxide having a uniform shape and particle size. Thus, it is possible to prevent expansion of the particle size distribution for the obtained particle of the metal complex hydroxide.

By setting the concentration of ammonia in the reaction aqueous solution to 25 g/l or less, it is possible to prevent the solubility of the metal ion from being excessively high, and to reduce the amount of the metal ion remaining in the reaction aqueous solution. Thus, the particle of the metal complex hydroxide having a desired composition can be obtained more reliably.

When the ammonia concentration varies, the solubility of the metal ion varies, and uniform hydroxide particles may not be formed. Therefore, it is preferable to keep the ammonia concentration within a certain range. For example, during the crystallization process, the ammonia concentration is preferably kept at a desired concentration having upper and lower ranges being within about 5 g/l.

After reaching in a steady-state, the precipitate may be collected, filtered, and washed to obtain the metal complex hydroxide particles. Alternatively, the aqueous solution containing the mixed aqueous solution, the alkaline aqueous solution, and possibly the ammonium ion donor, may be continuously supplied to the reactor to overflow from the reactor, and the precipitate may be collected, filtered, and washed to obtain the metal complex hydroxide particles.

The additive element M may be added by coating the surface of the particles of the metal complex hydroxide with the additive element M in order to optimize the crystallization conditions and to facilitate control of the composition ratio. In this case, the method of manufacturing the precursor according to the present embodiment may further include a coating process, in which the surface of the obtained particle of the metal complex hydroxide is coated with the additive element M.

In the coating process, the method for coating the surface of the particle of the metal complex hydroxide with the additive element M is not particularly limited. For example, various known methods may be used.

For example, the particles of the metal complex hydroxide are dispersed in pure water to form a slurry. The slurry is mixed with a solution containing the additive element M in an amount that commensurate with a target coating amount. The pH is adjusted by dropping an acid so that the pH becomes a predetermined value. The acid is not particularly limited, and one or more acids selected from sulfuric acid, hydrochloric acid, and nitric acid may be preferably used, for example.

After the pH value is adjusted, and after mixing for a predetermined period of time, filtration and drying may be performed to obtain a metal complex hydroxide coated with the additive element M.

The method for coating the additive element M on the surface of the particle of the metal complex hydroxide is not limited to the above-described method. For example, a method of drying a solution containing the compound of the additive element M and a solution containing the particle of the metal complex hydroxide by spray drying, and a method of impregnating the particles of the metal complex hydroxide with a solution containing the compound of the additive element M, may be used.

The particles of the metal complex hydroxide subjected to the coating process may be those in which a part of the additive element M is added in advance, and may also be those in which the additive element M is not included. When a part of the additive element M is added in advance, for example, the aqueous solution containing the additive element M may be added to the mixed aqueous solution in the crystallization process, as described above. When the particle of the metal complex hydroxide contains a part of the additive element M, it is preferable to adjust the amount of the additive element M to be added in the coating process so as to be a desired composition.

### [Method of manufacturing positive-electrode active material for lithium-ion secondary battery]

Next, an example configuration of a method of manufacturing a positive-electrode active material for lithium-ion secondary battery according to the present embodiment (hereinafter, also referred to as a "method of manufacturing a positive-electrode active material") will be described.

According to the method of manufacturing the positive electrode active material according to the present embodiment, the above-described positive electrode active material may be manufactured. The description will be omitted for certain features to avoid redundant description.

### (1) Outline of method of manufacturing positive-electrode active material for lithium-ion secondary battery according to the present embodiment

A method of manufacturing an positive-electrode active material for lithium-ion secondary battery according to the present embodiment may include following processes.

A mixing process of mixing a lithium compound with the precursor obtained by the method of manufacturing a precursor described above, to prepare a mixture of materials including lithium (Li), nickel (Ni), manganese (Mn), zirconium (Zr), and the additive element M (M) in a mole ratio of Li:Ni:Mn:Zr:M = x:a:b:c:d.

A firing process of firing the mixture of materials under an oxygen-containing atmosphere.

### (1-1) When "a" indicating content of nickel satisfies 0.10 ≤ a < 0.70

It is preferable that "x", "a", "b", "c", and "d" described above satisfy the following conditions: 0.95 ≤ x ≤ 1.20, 0.10 ≤ a < 0.70, 0.01 ≤ b ≤ 0.50, 0.0003 ≤ c ≤ 0.02, 0.01 ≤ d ≤ 0.50, and a + b + c + d = 1, and the additive element M may be one or more elements selected from Co, W, Mo, V, Mg, Ca, Al, Ti, and Ta.

When "a", which indicates the content of nickel, is within the above-described range, in the firing process, the mixture of the materials may be fired at a temperature of 760°C or more and 980°C or less under an oxygen-containing atmosphere in which the oxygen concentration is 70% by volume or more and 97% by volume or less.

### (1-2) When "a" indicating content of nickel satisfies 0.70 ≤ a ≤ 0.98

It is preferable that "x", "a", "b", "c", and "d" described above satisfy the following conditions: 0.95 ≤ x ≤ 1.20, 0.70 ≤ a ≤ 0.98, 0.01 ≤ b ≤ 0.20, 0.0003 ≤ c ≤ 0.02, 0.01 ≤ d ≤ 0.20, and a + b + c + d = 1, and the additive element M may be one or more elements selected from Co, W, Mo, V, Mg, Ca, Al, Ti, and Ta.

When "a", which indicates the content of nickel, is within the above-described range, in the firing process, the mixture of the materials may be fired at a temperature of 740°C or more and 900°C or less under an oxygen-containing atmosphere in which the oxygen concentration is 80% by volume or more and 100% by volume or less.

Hereinafter, each process will be described in detail.

### (A) Mixing process

In the mixing process, a lithium compound and the precursor obtained by the method of manufacturing a precursor may be mixed to obtain the mixture of materials.

The lithium compound is not particularly limited, and one or more lithium compounds selected from lithium carbonate and lithium hydroxide may be used for example. Lithium hydroxide may have hydration water, and may be used with the hydration water, but it is preferable that the hydration water is reduced by roasting in advance.

The description of the precursor is omitted here, because it has been described previously in the method of manufacturing the precursor.

It is preferable that the particle size and the like of the precursor and the lithium compound is adjusted in advance, so as to obtain the desired lithium complex oxide after the firing process.

It is possible to use a common mixer for mixing the precursor and the lithium compound; for example, a shaker mixer, a Lödige Mixer, a Julia Mixer, a V blender, or the like may be used. The mixing conditions in the mixing process are not particularly limited. It is preferable to select the conditions so that the ingredients as raw materials are mixed sufficiently so that the shape of the particles of materials such as the precursor are not destroyed.

It is preferable that the mixture of materials is thoroughly mixed in the mixing process before being subjected to the firing process. If mixing is inadequate, problems may arise such as Li / Me variation between individual particles, and failure to obtain sufficient battery characteristics. Li / Me means the ratio of the number of atoms of lithium and metals other than lithium contained in the mixture of materials.

It is preferable that the precursor and the lithium compound are weighed and mixed so that lithium (Li), nickel (Ni), manganese (Mn), zirconium (Zr), and the additive element M (M) are included in a mole ratio of Li:Ni:Mn:Zr:M=x:b:c:d, after mixing the mixture of materials. The preferred ranges of x, a, b, c, d, and e in such formula can be the same range as those described for the lithium complex oxide in the positive electrode active material. Therefore, the description will be omitted here.

This is because the content of each metal hardly changes before and after the firing process. Thus, it is preferable to mix so that the content of each metal in the mixture of materials is the same as a target content of each metal of the positive electrode active material obtained by the method of manufacturing the positive electrode active material according to the present embodiment.

### (B) Firing process

In the firing process, the mixture of materials obtained in the mixing process can be fired under an oxygen-containing atmosphere to obtain a lithium complex oxide.

When the mixture of materials is fired in the firing process, lithium in the lithium compound diffuses into the particle of the metal complex hydroxide in the precursor, thereby forming a lithium complex oxide consisting of a particle of polycrystalline structure.

The suitable firing conditions differ depending on the nickel content. Therefore, the firing conditions will be described below according to the nickel content.

### (B-1) when above-described "a" indicating content of nickel satisfies 0.10 ≤ a < 0.70

When "a", which indicates the content of nickel, satisfies 0.10 ≤ a < 0.70, it is preferable that the concentration of oxygen in the atmosphere in the firing process is 70% by volume or more and 97% by volume or less, more preferably 80% by volume or more and 97% by volume or less, and further preferably 85% by volume or more and 95% by volume or less.

When "a", which indicates the content of nickel, satisfies 0.10 ≤ a < 0.70, it is preferable to fire the mixture of materials at a temperature of 760°C or more and 980°C or less in the firing process as described above, and more preferably 780°C or more and 960°C or less.

By setting the firing temperature to 760°C or more, the diffusion of lithium into the particle of the metal complex hydroxide can be sufficiently achieved. Therefore, for example, it is possible to prevent excess lithium and unreacted particles from remaining, and a lithium complex oxide having a desired composition and well-organized crystalline structure can be obtained. Thus, when a positive electrode active material including such a particle of lithium complex oxide is used in a lithium ion secondary battery, desired battery characteristics can be achieved.

By setting the firing temperature to 980°C or less, sintering of the formed particles of lithium complex oxide is suppressed, and the occurrence of abnormal particle growth is prevented. When abnormal particle growth occurs, the particle after firing may become coarse, and the particle morphology may not be maintained. This may lead, when manufacturing the positive electrode, the specific surface area of the positive electrode to decrease and the resistance to increase, so that the battery capacity may be reduced.

It is preferable that the firing time is 3 hours or more, and more preferably 6 hours or more and 24 hours or less. By setting the firing time to 3 hours or more, the formation of the lithium complex oxide can be sufficiently advanced.

In the firing process, it is preferable to perform calcinating before the firing at 760°C or more and 980°C or less, which is the firing temperature. The calcinating is performed at a temperature of 105°C or more and less than 760°C, which is the temperature at which the lithium compound and the particle of the metal complex hydroxide may react with each other, and which is lower than the firing temperature. The calcinating temperature is more preferably 400°C or more and 700°C or less. By holding the mixture of materials at such a temperature, and calcinating the mixture, the diffusion of lithium into the particle of the metal complex hydroxide can be sufficiently achieved, and a particularly uniform lithium complex oxide can be obtained. For example, when lithium hydroxide is used as the lithium compound, it is preferable that the calcinating is performed by retaining the temperature at 400°C or more and 550°C or less for 1 hour or more and 10 hours or less.

### (B-2) When above-described "a" indicating content of nickel satisfies 0.70 ≤ a ≤ 0.98

When "a", which indicates the content of nickel, satisfies 0.70 ≤ a ≤ 0.98, it is preferable that the concentration of oxygen in the atmosphere in the firing process is 80% by volume or more and 100% by volume or less, more preferably 80% by volume or more and 97% by volume or less, and further preferably 85% by volume or more and 95% by volume or less.

When "a", which indicates the content of nickel, satisfies 0.70 ≤ a ≤ 0.98, it is preferable that the mixture of materials is fired at a temperature of 740°C or more and 900°C or less in the firing process as described above, and more preferably 750°C or more and 870°C or less.

By setting the firing temperature to 740°C or more, the diffusion of lithium into the particle of the metal complex hydroxide can be sufficiently achieved. Therefore, for example, it is possible to prevent excess lithium and unreacted particles from remaining, and a lithium complex oxide having a desired composition and well-organized crystalline structure can be obtained. Thus, when a positive electrode active material including such a particle of lithium complex oxide is used for a lithium ion secondary battery, desired battery characteristics can be achieved.

By setting the firing temperature to 900°C or less, sintering of the formed particles of lithium complex oxide is suppressed, and the occurrence of abnormal particle growth is prevented. When abnormal particle growth occurs, the particle after firing may become coarse, and the particle morphology may not be maintained. This may lead, when manufacturing the positive electrode, the specific surface area of the positive electrode to decrease and the resistance to increase, so that the battery capacity may be reduced.

It is preferable that the firing time is 3 hours or more, and more preferably 6 hours or more and 24 hours or less. By setting the firing time to 3 hours or more, the formation of the lithium complex oxide can be sufficiently advanced.

In the firing process, it is preferable to perform calcinating before the firing at 740°C or more and 900°C or less, which is the firing temperature. The calcinating is performed at a temperature of 105°C or more and less than 740°C, which is the temperature at which the lithium compound and the particle of the metal complex hydroxide may react with each other, and which is lower than the firing temperature. The calcinating temperature is more preferably 400°C or more and 700°C or less. By holding the mixture of materials at such a temperature, and calcinating the mixture, the diffusion of lithium into the particle of the metal complex hydroxide can be sufficiently achieved, and a particularly uniform lithium complex oxide can be obtained. For example, when lithium hydroxide is used as the lithium compound, it is preferable that the calcinating is performed by retaining the temperature at 400°C or more and 550°C or less for 1 hour or more and 10 hours or less.

### (B-3) Other suitable conditions for the firing process

The furnace used for the firing in the firing process is not particularly limited. For example, the furnace may be used for firing the mixture of materials in the atmosphere or in the stream of oxygen. As the furnace, an electric furnace with no gas generation is preferably used, and either of a batch furnace or a continuous furnace may be used.

The particles of the lithium complex oxide obtained by the firing may form coarse particles due to weak sintering or agglomeration, although sintering between the particles is prevented. In such a case, it is preferable to adjust the particle size distribution by cracking the above-described sintering and agglomeration.

The particles of the lithium complex oxide obtained after the firing can be the positive electrode active material of the present embodiment.

The method of manufacturing the positive electrode active material according to the present embodiment is not limited to the above-described process, and the method may further include any process.

### (C) Heat treatment process

The precursor may also be subjected to a heat treatment process prior to mixing with the lithium compound. That is, the method of manufacturing the positive electrode active material according to the present embodiment may further include a heat treatment process of heat treating the metal complex hydroxide particle that is a precursor, before the mixing process.

By subjecting the metal complex hydroxide particle to the heat treatment process in advance, the moisture contained in the metal complex hydroxide particle can be removed and reduced.

By subjecting the metal complex hydroxide particle to the heat treatment process and thereby sufficiently removing the moisture remaining in the particle, it is possible to prevent the ratio (Li / Me) of the number of atoms of lithium (Li) and a metal other than lithium (Me) in the positive electrode active material obtained after the firing process from fluctuating.

The temperature condition of the heat treatment process is not particularly limited as long as the remaining moisture in the metal complex hydroxide particle is removed by heating. For example, the temperature is preferably 105°C or more and 700°C or less. It is preferable that the temperature in the heat treatment process for heat treating the metal complex hydroxide particle is 105°C or more, because the remaining moisture can be efficiently removed in a short time. When the temperature in the heat treatment process for heat treating the metal complex hydroxide particle is 700°C or less, it is possible to particularly prevent the particles that are converted from the metal complex hydroxide to the metal complex oxide from sintering and agglomerating.

When the metal complex hydroxide is converted to the metal complex oxide in the heat treatment process, it is preferable that the temperature of the heat treatment is 350°C or more and 700°C or less.

The heat treatment is preferably performed under an oxygen-containing atmosphere. The concentration of oxygen in the oxygen-containing atmosphere during the heat treatment is preferably equal to or more than the concentration of oxygen in the air atmosphere, that is, the concentration of oxygen is 20% by volume or more. Because an oxygen atmosphere may be used, the upper limit of the oxygen concentration in the oxygen-containing atmosphere may be 100% by volume.

The heat treatment time in the heat treatment process is not particularly limited. The heat treatment time is preferably 1 hour or more, and more preferably 5 hours or more and 15 hours or less, because when the heat treatment time is less than 1 hour the remaining moisture in the metal complex hydroxide may not be sufficiently removed.

In the heat treatment process, an apparatus used to perform the heat treatment is not particularly limited. For example, an apparatus that can heat the metal complex hydroxide particle in an air stream may be suitably used. As the apparatus used to perform the heat treatment in the heat treatment process, an air blower dryer, and an electric furnace with no gas generation can be suitably used.

### [Lithium-ion secondary battery]

A lithium-ion secondary battery according to the present embodiment (hereinafter also referred to as "secondary battery") may include a positive electrode that includes the above-described positive electrode active material.

Hereinafter, an example configuration of a secondary battery according to the present embodiment will be described for each component. The secondary battery according to the present embodiment includes, for example, a positive electrode, a negative electrode, and a nonaqueous electrolyte, and includes the same components as a common lithium-ion secondary battery. The embodiments described below are merely exemplary, and the lithium-ion secondary battery according to the present embodiment can be implemented in various modifications and improvements based on the knowledge of a person skilled in the art, including the following embodiment. Also, the application of the secondary battery is not particularly limited.

### (Positive electrode)

The positive electrode of the secondary battery according to the present embodiment may include the above-described positive electrode active material.

Hereinafter, an example of a method of manufacturing the positive electrode will be described. The above-described positive electrode active material (in powder form), a conductive material, and a binding agent (binder) are mixed to form a positive-electrode composite material. If necessary, activated carbon or a solvent for the purpose of adjusting the viscosity can be added. The mixture is kneaded to prepare a positive-electrode composite material paste.

The mixing ratio of each material in the positive-electrode composite material is a factor that determines the performance of the lithium-ion secondary battery. The mixing ratio can be adjusted depending on the application. The mixing ratio of the materials may be the same as that of convention lithium-ion secondary batteries. For example, when the total mass of the solid content of the positive-electrode composite material, excluding the solvent, is 100% by mass, the positive-electrode composite material may include the positive electrode active material in a ratio of 60% by mass or more and 95% by mass or less, the conductive material in a ratio of 1% by mass or more and 20% by mass or less, and the binding agent in a ratio of 1% by mass or more and 20% by mass or less.

By applying the obtained positive-electrode composite material paste to the surface of a current collector made of, for example, aluminum foil, and drying the paste to scatter the solvent, a sheet-like positive electrode is formed. In order to increase the electrode density, pressure may be applied using a roll press and the like, if necessary. The sheet-like positive electrode thus obtained may be cut into an appropriate size according to the desired battery, and used for manufacturing the battery.

As the conductive material, for example, carbon black materials, such as graphite (natural graphite, artificial graphite, expanded graphite, and the like), acetylene black, and Ketjenblack (registered trademark), may be used.

The binding agent (binder) plays a role of binding the active material particles. For example, one or more binding agents selected from polyvinylidene fluoride (PVDF), polytetrafluoroethylene (PTFE), fluororubber, ethylene-propylene-diene rubber, styrene butadiene, cellulose-based resin, and polyacrylic acid, may be used.

If necessary, a solvent to dissolve the binding agent and to disperse the positive electrode active material, conductive material, and the like may be added to the positive-electrode composite material. As the solvent, for example, an organic solvent such as N-methyl-2-pyrrolidone may be used. Activated carbon may also be added to the positive-electrode composite material in order to increase the capacity of the electric double layer.

The method of manufacturing the positive electrode is not limited to the above-described example, and other methods may be used. For example, the positive-electrode composite material may be press-molded, and then dried under a vacuum atmosphere to manufacture the positive electrode.

### (Negative electrode)

As the negative electrode, a metallic lithium, a lithium alloy, and the like may be used. The negative electrode may be formed as follows. A negative-electrode active material capable of insertion and deinsertion of lithium ions is mixed with a binding agent. An appropriate solvent is added thereto, so that a paste-like negative-electrode composite material is obtained. The negative-electrode composite material is applied to the surface of a current collector made of metal foil such as copper, and dried. If necessary, compression is performed in order to increase the electrode density.

As the negative-electrode active material, for example, a fired product of an organic compound such as natural graphite, artificial graphite, and a phenol resin; and a powdery form of a carbon substance such as coke, may be used. As the binding agent for the negative electrode, as in the positive electrode, it is possible to use resin containing fluoride such as PVDF. As the solvent to disperse the negative electrode active material and the binding agent, an organic solvent such as N-methyl-2-pyrrolidone may be used.

### (Separator)

A separator may be sandwiched between the positive electrode and the negative electrode, if necessary. The separator separates the positive electrode and the negative electrode from each other, and retains the electrolyte. As the separator, a conventional separator may be used. Such a separator may be a thin film of, for example, polyethylene or polypropylene having a large number of fine openings.

### (Nonaqueous Electrolyte)

For example, a nonaqueous electrolyte solution may be used as the nonaqueous electrolyte.

The nonaqueous electrolyte solution is obtained by dissolving a lithium salt as a supporting salt in an organic solvent. The nonaqueous electrolyte solution is also obtained by dissolving a lithium salt in an ionic liquid. The ionic liquid refers to a salt that includes a cation other than lithium ion, and an anion, and is in a liquid state at a room temperature.

As the organic solvent, it is possible to use substances selected from among cyclic carbonates such as ethylene carbonate, propylene carbonate, butylene carbonate, and trifluoropropylene carbonate; chain carbonates such as diethyl carbonate, dimethyl carbonate, ethylmethyl carbonate, and dipropyl carbonate; ether compounds such as tetrahydrofuran, 2-methyltetrahydrofuran, and dimethoxyethane; sulfur compounds such as ethylmethylsulfone and butane sultone; and phosphorus compounds such as triethyl phosphate and trioctyl phosphate. These substances may be used either alone or in mixtures of two or more.

As the supporting salt, it is possible to use LiPF₆, LiBF₄, LiClO₄, LiAsF₆, LiN (CF₃SO₂)₂, and a composite salt of these. The nonaqueous electrolyte solution may further include a radical scavenger, a surfactant, a flame retardant, and the like.

As the nonaqueous electrolyte, a solid electrolyte may be used. The solid electrolyte has the property to withstand high voltages. Examples of the solid electrolyte include an inorganic solid electrolyte and an organic solid electrolyte.

Examples of the inorganic solid electrolyte include an oxide solid electrolyte and a sulfide solid electrolyte.

The oxide solid electrolyte is not particularly limited. For example, it is preferable to use an oxide solid electrolyte that includes oxygen (O) and has both a lithium ion conductivity and an electron insulating property. As the oxide solid electrolyte, one or more substance selected from lithium phosphate (Li₃PO₄), Li₃PO₄N_{X}, LiBO₂N_{X}, LiNbO₃, LiTaO₃, Li₂SiO₃, Li₄SiO₄-Li₃PO₄, Li₄SiO₄-Li₃VO₄, Li₂O-B₂O₃-P₂O₅, Li₂O-SiO₂, Li₂O-B₂O₃-ZnO, Li_{1+X}Al_{X}Ti_{2-X}(PO₄)₃ (0 ≤ X ≤ 1), Li_{1+X}Al_{X}Ge_{2-X}(PO₄)₃ (0 ≤ X ≤ 1), LiTi₂(PO₄)₃, Li_{3X}La_{2/3-X}TiO₃ (0 ≤ X ≤ 2/3), Li₅La₃Ta₂O₁₂, L1₇La₃Zr₂O_{12,} Li₆BaLa₂Ta₂O₁₂, Li_{3.6}Si_{0.6}P_{0.4}O₄, and the like may be used.

The sulfide solid electrolyte is not particularly limited. For example, it is preferable to use an sulfide solid electrolyte that includes sulfur (S) and has both a lithium ion conductivity and an electron insulating property. As the sulfide solid electrolyte, one or more substance selected from Li₂S-P₂S₅, Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and the like may be used.

As the inorganic solid electrolyte, those other than the above may be used. For example, Li₃N, LiI, Li₃N-LiI-LiOH, and the like may be used.

The organic solid electrolyte is not particularly limited as long as it is a polymer compound exhibiting ion conductivity. For example, polyethylene oxide, polypropylene oxide, copolymers thereof, and the like may be used. The organic solid electrolyte may also include a supporting salt (lithium salt).

### (Shape and configuration of secondary battery)

The above-described lithium-ion secondary battery according to the present embodiment may be of various shapes, such as a cylindrical shape and a stacked shape. In any shape, when the secondary battery according to the present embodiment uses a nonaqueous electrolyte solution as source of a lithium ion, the configuration of the secondary battery may be as follows. The positive electrode and the negative electrode are stacked via the separator to form an electrode body, and the electrode body is impregnated with the nonaqueous electrolyte solution. By using leads for current collection, between the positive electrode current collector and a positive electrode terminal leading to the outside, and between the negative current collector and a negative electrode terminal leading to the outside, are connected. Those are sealed in a battery case.

As described above, the secondary battery according to the present embodiment is not limited to using a nonaqueous electrolyte solution as the nonaqueous electrolyte. For example, a secondary battery using a solid nonaqueous electrolyte, that is, an all-solid-state battery, may be applied. In the case of the all-solid-state battery, the configuration other than the positive electrode active material may be changed as necessary.

In the secondary battery according to the present embodiment, the generation of gas is prevented, and excellent storage stability is achieved. For this reason, the secondary battery according to the present embodiment is particularly suitable as a battery that is susceptible to the generation of gas, such as a laminated battery. The secondary battery according to the embodiment can stabilize the battery characteristics by preventing the generation of gas. Thus, the secondary battery according to the embodiment can also be suitably used as batteries other than a laminated battery.

The secondary battery according to the present embodiment may be used for various applications. Because the secondary battery according to the present embodiment has excellent storage stability, high capacity, and high output, the secondary battery is suitable as a power source for small portable electronic devices (for example, a laptop personal computer, a mobile phone terminal, and the like) that require high capacity at all times, and is also suitable as a power source for electric vehicles that require high output.

In addition, because the secondary battery according to the present embodiment can be miniaturized and increased in output, the secondary battery is suitable as a power source for an electric vehicle, which has limited space for mounting a battery. The secondary battery according to the present embodiment may be used not only as a power source for an electric vehicle driven by purely electrical energy, but also as a power source for so-called hybrid vehicles in which a combustion engine such as a gasoline engine or a diesel engine is combined with a secondary battery.

### [Example]

Hereinafter, the present invention will be described in further detail by way of examples and reference examples. The present invention is not limited to these examples. In the following examples, a method for analyzing a metal contained in the precursor and the positive electrode active material, and methods for evaluating the precursor and the positive electrode active material, are as follows.

### (1) Composition analysis

ICP emission spectroscopy was performed using an ICP emission spectrometer (manufactured by Shimadzu Corporation, model : ICPS8100).

### (2) Particle size distribution

The particle size distribution on a volume basis was evaluated using a laser diffraction scattering particle size distribution measuring device (Microtrack HRA (trademark), manufactured by Nikkiso Co., Ltd.). For the precursor, based on the particle size distribution, D10, average particle diameter D50, D90, and a ratio of the cumulative particle abundance of particles with a particle diameter of 5 µm or less to the whole particles, were calculated. In Table 1, the ratio of the cumulative particle abundance of particles with a particle diameter of 5 µm or less to the whole particles is described as "cumulative particle abundance of particles with particle diameter of 5 µm or less."

For the positive electrode active material, based on the particle size distribution, D10, the average particle diameter D50, D90, and the variation in particle diameter [(D90 - D10) / average particle diameter D50] were calculated.

### (3) Measurement and evaluation of XRD pattern

The obtained positive electrode active material was evaluated by an XRD diffraction pattern using Cu-K_{α} rays with an XRD diffractometer (X'Pert PRO, manufactured by PANalytical). The measurement conditions were an output of 45 kV and 40 mA, a step size of 0.0168°, and a scan speed of 0.0508° / sec.

From the diffraction pattern, the ratio (I₂ / I₁) of the integrated intensity (I₂) of the (110) diffraction peak of Li₂ZrO₃, which is a compound including lithium and zirconium, to the integrated intensity (I₁) of the (003) diffraction peak of the hexagonal layered structure, was calculated.

Normally, the (003) diffraction peak of the hexagonal layered structure appears at 2θ = 18° to 19°, and the (110) diffraction peak of Li₂ZrO₃ appears at 2θ = 19.5° to 21.0°. For a peak below the detection limit, calculation was performed by setting the integrated intensity of the peak to 0.

The presence or absence of a different phase was also confirmed based on the obtained XRD pattern.

### (4) Composition analysis of particle cross-section

A metal complex hydroxide particle, which is a precursor, was fabricated to allow cross-sectional analysis of the particle by Scanning Transmission Electron Microscope (STEM). Specifically, the particles of metal complex hydroxide were embedded in a resin, and the cross section of the particles were exposed by polishing. Then, three particles were randomly selected from the plurality of secondary particles included in the precursor, and the composition of each particle cross section was analyzed by EDX provided in the STEM. An inner circle that is inscribed in the cross-sectional contour of the selected particle of metal complex hydroxide is drawn, and the linear analysis is performed by EDX at multiple points on the line segment drawn along any diameter direction from the center of the circle. Four points were selected for analysis: the center of the cross section of the particle, the outer periphery of the particle, two points in which the distance to the center and the distance to the outer periphery of the particle are equal. In the composition analysis, the concentration was expressed in a molar ratio when the total amount of nickel, manganese, cobalt, and zirconium, which are metal elements excluding lithium, was set to 1.

From the results of the line analysis, the ratio of the maximum zirconium concentration to the average zirconium concentration of the individual particles evaluated was determined. The average value of the evaluation results for the three particles was taken as the ratio of the maximum zirconium concentration to the average zirconium concentration for the precursor. In Table 1, the ratio of the maximum zirconium concentration to the average zirconium concentration is described as "maximum Zr concentration / average Zr concentration."

### (5) Oil absorption

Oil absorption was measured from DBP absorption measured in accordance with JIS K6217-4:2008.

### (6) Amount of eluted lithium

The amount of the eluted lithium of the positive electrode active material was evaluated by the Warder method, which is one of neutralization titration methods. From the evaluation results, amounts of lithium hydroxide (LiOH) and lithium carbonate (Li₂CO₃) were calculated. The ratio of the sum of these lithium amounts in the positive electrode active material was defined as the amount of the eluted lithium.

Specifically, pure water was added to the obtained positive electrode active material, and the mixture was agitated and filtered. Hydrochloric acid was added to the filtrate while measuring the pH, and the compound state of the eluted lithium was evaluated from the neutralization point. The titration described above was performed up to a second neutralization point. The amount of lithium in the filtrate was calculated from the amount of the hydrochloric acid dropped up to the second neutralization point and the concentration of the hydrochloric acid. The alkaline content neutralized with hydrochloric acid up to the second neutralization point was defined as the amount of lithium (Li) derived from lithium hydroxide (LiOH) and lithium carbonate (Li₂CO₃). The calculated amount of lithium in the filtrate was divided by the amount of a sample of the positive electrode active material used in preparing the filtrate, so that the amount of the eluted lithium was obtained by converting the unit to percent by mass.

### (7) Specific surface area

Using a specific surface area and pore distribution measuring device (manufactured by Mountech Co. Ltd., Macsorb (registered trade mark) HM1200 series), the measurement was performed by BET method by nitrogen adsorption.

### (8) Battery evaluation

### (Preparation of Battery)

Positive electrode active materials produced in Experimental Example 2-1 to Experimental Example 2-6 below were used. A coin battery of the structure described in Fig. 1 and a laminated battery of the structure described in Fig. 2 were manufactured, and the batteries were evaluated according to the following procedure.

### (a) Coin battery

As described in Fig. 1, a coin battery 10 includes a case 11, and an electrode 12 included in the case 11.

The case 11 includes a positive electrode can 111 which is hollow and one-end opened, and a negative electrode can 112 disposed in an opening of the positive electrode can 111. When the negative electrode can 112 is disposed in the opening of the positive electrode can 111, a space for accommodating the electrode 12 is formed between the negative electrode can 112 and the positive electrode can 111.

The electrode 12 includes a positive electrode 121, a separator 122, and a negative electrode 123. The positive electrode 121, the separator 122, and the negative electrode 123 are stacked in this order and are housed in the case 11 such that the positive electrode 121 contacts the inner surface of the positive electrode can 111, and the negative electrode 123 contacts the inner surface of the negative electrode can 112.

The case 11 includes a gasket 113. The gasket 113 regulates the relative movement of the positive electrode can 111 and the negative electrode can 112, and fixes the positive electrode can 111 and the negative electrode can 112. This enables the positive electrode can 111 and the negative electrode can 112 to be maintained in a non-contact state to each other, that is, an electrically isolated state. The gasket 113 also has a function of sealing the gap between the positive electrode can 111 and the negative electrode can 112 so as to make the interior and exterior of the case 11 air-tight and liquid-tight.

The coin battery 10 was manufactured as follows. First, 52.5 mg of the obtained positive electrode active material, 15 mg of acetylene black, and 7.5 mg of polytetrafluoroethylene (PTFE) resin were mixed and thinned to a weight of approximately 75 mg with a diameter of 11 mm to prepare the positive electrode 121. The positive electrode 121 was dried in a vacuum dryer at 100°C for 12 hours.

The positive electrode 121, the negative electrode 123, the separator 122, and the electrolyte were used to produce the coin battery 10 in a glove box in an Ar atmosphere having a dew point controlled to -60°C.

As the negative electrode 123, lithium metal that is punched out into a disk of 13 mm diameter was used.

As the separator 122, a polyethylene porous film with a thickness of 25 µm was used. As the electrolyte solution, a 1:1 mixture on a volume basis of ethylene carbonate (EC) and diethyl carbonate (DEC) with 1 mol/l LiClO₄ as supporting electrolyte (manufactured by Tomiyama pure chemical industries, Ltd.) was used.

### (b) Laminated battery

As described in Fig. 2, the laminated battery 20 has a structure in which a stacked body of the positive-electrode film 21, the separator 22, and the negative-electrode film 23 is impregnated with an electrolyte solution, and is sealed with a laminate 24. A positive electrode tab 25 is connected to the positive-electrode film 21, and a negative electrode tab 26 is connected to the negative-electrode film 23. The positive electrode tab 25 and the negative electrode tab 26 are exposed outside the laminate 24.

A slurry of 20.0 g of the obtained positive electrode active material, 2.35 g of acetylene black, and 1.18 g of polyvinylidene fluoride dispersed in N-methyl-2-pyrrolidone (NMP) was coated on an aluminum foil, such that 7.0 mg of the positive electrode active material per 1 cm² was applied. The aluminum foil was then dried in air at 120°C for 30 minutes to remove NMP. The aluminum foil, which was coated with the positive electrode active material, was cut into a rectangular strip with 66 mm wide, and rolled and pressed with a load of 1.2 tons to manufacture a positive-electrode film. The positive-electrode film was cut out into a rectangle of 50 mm x 30 mm, and dried in a vacuum dryer at 120°C for 12 hours to prepare the positive-electrode film 21 of the laminated battery 20.

The negative-electrode film 23 was prepared by applying a negative-electrode composite material paste, which was a mixture of graphite powder having an average particle diameter of about 20 µm and polyvinylidene fluoride, on a copper foil. As the separator 22, a polyethylene porous film with a film thickness of 20 µm was used. As the electrolyte solution, a 3:7 mixture of ethylene carbonate (EC) and diethyl carbonate (DEC) with 1 mol/l LiPF₆ as supporting electrolyte (manufactured by Ube Industries, Ltd.) was used.

A stacked body of the above-described positive-electrode film 21, the separator 22, and the negative-electrode film 23 was impregnated with the electrolyte solution in a dry room having a dew point controlled to -60°C, and sealed with the laminate 24 to produce the laminated battery 20.

In each of Experimental Example 2-4 to Experimental Example 2-6, two laminated batteries were produced, to evaluate the amount of stored gas and the cycle characteristics.

### (Evaluation of battery characteristics)

An initial charge capacity, an initial discharge capacity, and an efficiency were evaluated using the coin battery described in Fig. 1, which was produced in the following Experimental Examples. The amount of stored gas was evaluated using the laminated battery described in Fig. 2. In Experimental Example 2-4 to Experimental Example 2-6, the cycle characteristics were also evaluated using the laminated battery described in Fig. 2.

### (a) Initial charge capacity, initial discharge capacity, and efficiency

The coin batteries manufactured in each Experimental Example were left for about 12 hours from the manufacture. After the open circuit voltage (OCV) was stabilized, charging was performed by setting the current density with respect to the positive electrode to 0.1 mA/cm² to the cut-off voltage of 4.3 V. The capacity then was defined as an initial charge capacity. After the charging and a pausing for 1 hour after the charging, discharging was performed to the cut-off voltage of 3.0 V. The capacity then was defined as an initial discharge capacity.

The efficiency, which is the ratio of the initial discharge capacity to the initial charge capacity, was calculated.

### (b) Amount of stored gas

After the manufacture of the laminated battery, conditioning was performed by repeating a cycle of charging the laminated battery in an isothermal bath held at 25°C by setting the current density to 0.3 mA/cm² to the cut-off voltage of 4.2 V, pausing for 1 hour, and discharging to the cut-off voltage of 2.5 V, for 5 cycles. The gas generated during the process was vented from inside the laminated battery. The volume of the laminated battery was measured by the Archimedes method.

The charge/discharge capacity was then measured. Based on the charge/discharge capacity, a constant current constant voltage (CCCV) charging was performed at a temperature of 25°C so that the state of charge (SOC) was 100%, to the voltage of 4.2 V.

After charging, the battery was stored in an isothermal bath set at 60°C for 7 days. After the 7 days, the battery was discharged to 2.5 V. After discharging, the volume of the laminated battery was measured by the Archimedes method. The amount of gas generated in the battery was evaluated based on the difference between the volume of the laminated battery thus measured and the volume of the laminated battery measured after the conditioning. The evaluated amount of gas generated in the battery was defined as the amount of stored gas.

### (c) Cycle characteristics

Cycle characteristics were evaluated by measuring the capacity retention rate after 500 cycles of charge and discharge. Specifically, conditioning was performed by repeating a cycle of charging the laminated battery in an isothermal bath held at 25°C by setting the current density to 0.3 mA/cm² to the cut-off voltage of 4.2 V, pausing for 10 minutes, and discharging to the cut-off voltage of 2.5 V, for 5 cycles. After the conditioning, a cycle of charging the laminated battery in an isothermal bath held at 45°C by setting the current density to 2.0 mA/cm² to the cut-off voltage of 4.2 V, pausing for 10 minutes, and discharging to the cut-off voltage of 2.5 V, was repeated for 500 cycles. A capacity retention rate, which is a ratio of the discharge capacity after the 500th cycle to the discharge capacity after the 1st cycle, was calculated and evaluated.

The precursor preparation conditions will be described below. Experimental Example 1-1 and Experimental Example 1-4 are examples. Experimental Example 1-2, Experimental Example 1-3, Experimental Example 1-5, and Experimental Example 1-6 are reference examples.

### [Experimental Example 1-1]

### (Crystallization process)

50 l of pure water was added to the reactor (60 l), and the temperature in the reactor was set to 45°C while stirring. By adding a mixed aqueous solution, an alkaline aqueous solution, and a complexing agent simultaneously and continuously in the reactor, the reaction aqueous solution was prepared.

The mixed aqueous solution was prepared as follows. Nickel sulfate, manganese sulfate, and cobalt sulfate were dissolved in pure water so that the mole ratio of nickel, manganese, and cobalt was 55 : 25 : 20, to prepare an aqueous solution. Into the aqueous solution, zirconium sulfate was dissolved so that the mole ratio of the total amount of nickel, manganese, and cobalt, and the amount of zirconium was 99.5 : 0.5. Thus, a mixed aqueous solution containing zirconium salt was prepared. The mixed aqueous solution was adjusted to have a metal ion concentration of 2.0 mol/l, and a pH of 0.5 using sulfuric acid.

As the alkaline aqueous solution, 25% by mass of aqueous sodium hydroxide solution was used. As the complexing agent, 25% by mass of ammonia solution was used.

When preparing the reaction aqueous solution, the flow rate of each solution was controlled so that the residence time of the reaction aqueous solution in the reactor was 8 hours. The dissolved nickel concentration of the reaction aqueous solution in the reactor was adjusted to 350 mg/l by adjusting the pH to 10 or more and 13 or less at a reference temperature of 25°C, and the ammonia concentration to 11 g/l or more and 15 g/l or less, so that the metal complex hydroxide was crystallized.

After the reactor was stabilized, the slurry containing the metal complex hydroxide was recovered from the overflow port, and then filtration was performed to obtain a cake of the metal complex hydroxide. The impurities were washed away by passing 1 l of pure water through 140 g of the metal complex hydroxide in the denver (filter cloth) used for the filtration.

The filtered particles were dried to prepare a precursor consisting of a metal complex hydroxide particle represented by Ni_{0.548}Mn_{0.248}CO_{0.199}Zr_{0.005}(OH)_{2+β} (0 ≤ β ≤ 0.4) .

The measurement results of the particle size distribution of the obtained precursor are described in Fig. 3. From the particle size distribution of the obtained precursor, D10, D50, D90, and the ratio of the cumulative particle abundance of particles with a particle diameter of 5 µm or less to the whole particles (in Table 1, it is described as "cumulative particle abundance of particles with particle diameter of 5 µm or less", as described above) were calculated. The results are given in Table 1.

SEM images of the obtained metal complex hydroxide particles are described in Figs. 4A and 4B. Fig. 4B is a partially enlarged view of Fig. 4A.

The cross-section of the metal complex hydroxide particle was exposed. Three particles that are considered to include the center of secondary particles by STEM observation were selected. The composition of each particle cross section was analyzed by EDX, and the ratio of the maximum zirconium concentration to the average zirconium concentration was determined by EDX. The results are given in Table 1. In the STEM images of the cross-section of the selected one particle of the metal complex hydroxide, the measurement areas where the EDX analysis were performed are indicated in Figs. 5A to 5D. The analysis results at each measurement position described in Figs. 5A to 5D and the calculated evaluation results are given in Table 2. In Table 2, Analysis Point 1 represents the measurement result in the measurement area 51 in Fig. 5A, Analysis Point 2 represents the measurement result in the measurement area 52 in Fig. 5B, Analysis Point 3 represents the measurement result in the measurement area 53 in Fig. 5C, and Analysis Point 4 represents the measurement results in the measurement area 54 in Fig. 5D. Therefore, the Analysis Point 1 represents the measurement result at the outermost circumference, and the Analysis Point 4 represents the measurement result at the center. Table 2 also describes the average value, maximum value, and maximum value / average value (in Table 2, it is described as "maximum / average") of the zirconium concentration at Analysis Point 1 to Analysis Point 4 for the one metal complex hydroxide particle measured.

### [Experimental Example 1-2]

A metal complex hydroxide particle was prepared in the same manner as Experimental Example 1-1, except that the pH of the mixed aqueous solution containing zirconium salt used in the crystallization process was adjusted to 3.0.

The obtained measurement results of the particle size distribution of the metal complex hydroxide particles are described in Fig. 3. From the particle size distribution of the obtained metal complex hydroxide particles, D10, D50, D90, and the ratio of the cumulative particle abundance of particles with a particle diameter of 5 µm or less were calculated. The results are given in Table 1.

The composition of the above-described particle cross section was analyzed for the obtained metal complex hydroxide particles, and the ratio of the maximum zirconium concentration to the average zirconium concentration was determined. The results are given in Table 1.

SEM images of the obtained metal complex hydroxide particles are described in Figs. 4C and 4D. Fig. 4D is a partially enlarged view of Fig. 4C.

### [Experimental Example 1-3]

### (Crystallization process)

50 l of pure water was added to a reactor (60 l), and the temperature in the reactor was set to 45°C while stirring. By adding a mixed aqueous solution, an alkaline aqueous solution, and a complexing agent simultaneously and continuously in the reactor, a reaction aqueous solution was prepared.

As the mixed aqueous solution, an aqueous solution having a metal ion concentration of 2.0 mol/l was used. The aqueous solution was prepared as follows. Nickel sulfate, manganese sulfate, and cobalt sulfate were dissolved in pure water so that the mole ratio of nickel, manganese, and cobalt was 55 : 25 : 20.

As the alkaline aqueous solution, an aqueous solution of 25% by mass of sodium hydroxide was used. As the complexing agent, an aqueous solution of 25% by mass of ammonia was used.

When preparing the reaction aqueous solution, the flow rate of each solution was controlled so that the residence time of the reaction aqueous solution in the reactor was 8 hours. The dissolved nickel concentration of the reaction aqueous solution in the reactor was adjusted to 350 mg/l by adjusting the pH to 10 or more and 13 or less at a reference temperature of 25°C, and the ammonia concentration to 11 g/l or more and 15 g/l or less, so that the metal complex hydroxide was crystallized.

After the reactor was stabilized, the slurry containing the metal complex hydroxide was recovered from the overflow port, and then filtration was performed to obtain a cake of the metal complex hydroxide. The impurities were washed away by passing 1 l of pure water through 140 g of the metal complex hydroxide in the denver (filter cloth) used for the filtration.

The filtered particles were dried to prepare a metal complex hydroxide particle represented by Ni_{0.55}Mn_{0.25}C0_{0.20}(OH)_{2+β} (0 ≤ β ≤ 0.4).

From the particle size distribution of the obtained metal complex hydroxide particle, D10, D50, D90, and the ratio of the cumulative particle abundance of particles with a particle diameter of 5 µm or less to the whole particles were calculated. The results are given in Table 1.

### [Experimental Example 1-4]

### (Crystallization process)

50 l of pure water was added to a reactor (60 l), and the temperature in the reactor was set to 49°C while stirring. By adding a mixed aqueous solution, an alkaline aqueous solution, and a complexing agent simultaneously and continuously in the reactor, a reaction aqueous solution was prepared.

The mixed aqueous solution was prepared as follows. Nickel sulfate, manganese sulfate, and cobalt sulfate were dissolved in pure water so that the mole ratio of nickel, manganese, and cobalt was 85 : 10 : 5, to prepare an aqueous solution. Into the aqueous solution, zirconium sulfate was dissolved so that the mole ratio of the total amount of nickel, manganese, and cobalt, and the amount of zirconium was 99.5 : 0.5. Thus, a mixed aqueous solution containing zirconium salt was prepared. The mixed aqueous solution was adjusted to have a metal ion concentration of 2.0 mol/l, and a pH of 0.5 using sulfuric acid.

As the alkaline aqueous solution, 25% by mass of aqueous sodium hydroxide solution was used. As the complexing agent, 25% by mass of ammonia solution was used.

When preparing the reaction aqueous solution, the flow rate of each solution was controlled so that the residence time of the reaction aqueous solution in the reactor was 8 hours. The dissolved nickel concentration of the reaction aqueous solution in the reactor was adjusted to 5 to 15 mg/l by adjusting the pH to 10 or more and 13 or less at a reference temperature of 25°C, and the ammonia concentration to 11 g/l or more and 15 g/l or less, so that the metal complex hydroxide was crystallized.

After the reactor was stabilized, the slurry containing the metal complex hydroxide was recovered from the overflow port, and then filtration was performed to obtain a cake of the metal complex hydroxide. The impurities were washed away by passing 1 l of pure water through 140 g of the metal complex hydroxide in the denver (filter cloth) used for the filtration.

The filtered particles were dried to prepare a precursor consisting of a metal complex hydroxide particle represented by Ni_{0.847}Mn_{0.099}Co_{0.049}Zr_{0.005}(OH)_{2+β} (0 ≤ β ≤ 0.4) .

The measurement results of the particle size distribution of the obtained precursor are described in Fig. 6. From the particle size distribution of the obtained precursor, D10, D50, D90, and the ratio of the cumulative particle abundance of particles with a particle diameter of 5 µm or less to the whole particles (in Table 1, it is described as "cumulative particle abundance of particles with particle diameter of 5 µm or less", as described above) were calculated. The results are given in Table 1.

SEM images of the obtained metal complex hydroxide particles are described in Figs. 7A and 7B. Fig. 7B is a partially enlarged view of Fig. 7A.

The cross-section of the metal complex hydroxide particle was exposed. Three particles that are considered to include the center of secondary particles by STEM observation were selected. The composition of each particle cross section was analyzed by EDX, and the ratio of the maximum zirconium concentration to the average zirconium concentration was determined by EDX. The results are given in Table 3. In the STEM image of the cross-section of the selected one particle of the metal complex hydroxide, the measurement areas where the EDX analysis were performed are indicated in Figs. 8A to 8D. The analysis results at each measurement position described in Figs. 8A to 8D and the calculated evaluation results are given in Table 3. In Table 3, Analysis Point 1 represents the measurement result in the measurement area 81 in Fig. 8A, Analysis Point 2 represents the measurement result in the measurement area 82 in Fig. 8B, Analysis Point 3 represents the measurement result in the measurement area 83 in Fig. 8C, and Analysis Point 4 represents the measurement results in the measurement area 84 in Fig. 8D. Therefore, the Analysis Point 1 represents the measurement result at the outermost circumference, and the Analysis Point 4 represents the measurement result at the center. Table 3 also describes the average value, maximum value, and maximum value / average value (in Table 3, it is described as "maximum / average") of the zirconium concentration at Analysis Point 1 to Analysis Point 4 for the one metal complex hydroxide particle measured.

### [Experimental Example 1-5]

A metal complex hydroxide particle was prepared in the same manner as Experimental Example 1-4, except that the pH of the mixed aqueous solution containing zirconium salt used in the crystallization process was adjusted to 3.0.

The obtained measurement results of the particle size distribution of the metal complex hydroxide particles are described in Fig. 6. From the particle size distribution of the obtained metal complex hydroxide particles, D10, D50, D90, and the ratio of the cumulative particle abundance of particles with a particle diameter of 5 µm or less were calculated. The results are given in Table 1.

The composition of the above-described particle cross section was analyzed for the obtained metal complex hydroxide particles, and the ratio of the maximum zirconium concentration to the average zirconium concentration was determined. The results are given in Table 1.

SEM images of the obtained metal complex hydroxide particles are described in Figs. 7C and 7D. Fig. 7D is a partially enlarged view of Fig. 7C.

### [Experimental Example 1-6]

### (Crystallization process)

50 l of pure water was added to a reactor (60 l), and the temperature in the reactor was set to 49°C while stirring. By adding a mixed aqueous solution, an alkaline aqueous solution, and a complexing agent simultaneously and continuously in the reactor, a reaction aqueous solution was prepared.

As the mixed aqueous solution, an aqueous solution having a metal ion concentration of 2.0 mol/l was used. The aqueous solution was prepared as follows. Nickel sulfate, manganese sulfate, and cobalt sulfate were dissolved in pure water so that the mole ratio of nickel, manganese, and cobalt was 85 : 10 : 5.

As the alkaline aqueous solution, 25% by mass of aqueous sodium hydroxide solution was used. As the complexing agent, 25% by mass of ammonia solution was used.

When preparing the reaction aqueous solution, the flow rate of each solution was controlled so that the residence time of the reaction aqueous solution in the reactor was 8 hours. The dissolved nickel concentration of the reaction aqueous solution in the reactor was adjusted to 5 to 15 mg/l by adjusting the pH to 10 or more and 13 or less at a reference temperature of 25°C, and the ammonia concentration to 11 g/l or more and 15 g/l or less, so that the metal complex hydroxide was crystallized.

After the reactor was stabilized, the slurry containing the metal complex hydroxide was recovered from the overflow port, and then filtration was performed to obtain a cake of the metal complex hydroxide. The impurities were washed away by passing 1 l of pure water through 140 g of the metal complex hydroxide in the denver (filter cloth) used for the filtration.

The filtered particles were dried to prepare a metal complex hydroxide particle represented by Ni_{0.85}Mn_{0.10}Co_{0.05}(OH)_{2+β} (0 ≤ β ≤ 0.4).

From the particle size distribution of the obtained metal complex hydroxide particle, D10, D50, D90, and the ratio of the cumulative particle abundance of particles with a particle diameter of 5 µm or less to the whole particles were calculated. The results are given in Table 1.

**[Table 1]**

| | pH OF MIXED AQUEOUS SOLUTION CONTAINING ZIRCONIUM SALT | D10 [*µ*m] | D50 [*µ*m] | D90 [*µ*m] | CUMULATIVE PARTICLE ABUNDANCE OF PARTICLES WITH PARTICLE DIAMETER OF 5 *µ*m OR LESS [%] | MAXIMUM Zr CONCENTRATION / AVERAGE Zr CONCENTRATION |
|---|---|---|---|---|---|---|
| EXPERIMENTAL EXAMPLE 1-1 | 0.5 | 7.8 | 13.4 | 20.7 | 1.2 | 1.2 |
| EXPERIMENTAL EXAMPLE 1-2 | 3.0 | 4.2 | 7.6 | 14.5 | 19.3 | 3.1 |
| EXPERIMENT AL EXAMPLE 1-3 | - | 7.7 | 13.3 | 20.8 | 1.2 | - |
| EXPERIMENTAL EXAMPLE 1-4 | 0.5 | 6.9 | 12.2 | 19.0 | 2.27 | 1.3 |
| EXPERIMENTAL EXAMPLE 1-5 | 3.0 | 2.8 | 6.0 | 9.7 | 36.6 | 3.5 |
| EXPERIMENT AL EXAMPLE 1-6 | - | 7.2 | 12.2 | 18.3 | 1.34 | - |

**[Table 2]**

| | ZIRCONIUM CONCENTRATION |
|---|---|
| ANALYSIS POINT 1 | 0.43 |
| ANALYSIS POINT 2 | 0.46 |
| ANALYSIS POINT 3 | 0.49 |
| ANALYSIS POINT 4 | 0.48 |
| AVERAGE ZIRCONIUM CONCENTRATION | 0.47 |
| MAXIMUM ZIRCONIUM CONCENTRATION | 0.49 |
| MAXIMUM / AVERAGE | 1.05 |

**[Table 3]**

| | ZIRCONIUM CONCENTRATION |
|---|---|
| ANALYSIS POINT 1 | 0.38 |
| ANALYSIS POINT 2 | 0.3 |
| ANALYSIS POINT 3 | 0.26 |
| ANALYSIS POINT 4 | 0.37 |
| AVERAGE ZIRCONIUM CONCENTRATION | 0.33 |
| MAXIMUM ZIRCONIUM CONCENTRATION | 0.38 |
| MAXIMUM / AVERAGE | 1.16 |

Experimental Example 1-1 and Experimental Example 1-4, in which the mixed aqueous solution containing zirconium salt and the pH is 0.5 is used, had the same size distribution as Experimental Example 1-3 and Experimental Example 1-6, respectively, in which the mixed aqueous solution containing no zirconium is used. In Experimental Example 1-2 and Experimental Example 1-5, in which the mixed aqueous solution containing zirconium salt and the pH is 3.0 is used, the particle size distribution were shifted to finer particle size. Thus, in comparison to Experimental Example 1-1 and Experimental Example 1-4, the ratio of the cumulative particle abundance of particles with a particle diameter of 5 µm or less to the whole particles were clearly increased.

From the particle size distribution measurement results described in Fig. 3 and Fig. 6, the shift of the above-described particle size distribution can be confirmed.

From the SEM observation results described in Figs. 4A to 4D, fine particles (indicated by the end of the arrow) were observed in the metal complex hydroxide particles of Experimental Example 1-2 described in Fig. 4C. It was confirmed that the sphericity of the metal complex hydroxide particles of Experimental Example 1-1 in Figs. 4A and 4B was higher than that of the metal complex hydroxide particles of Experimental Example 1-2 in Figs. 4C and 4D.

From the SEM observation results described in Figs. 7A to 7D, it was confirmed that the metal complex hydroxide particles of Experimental Example 1-5 described in Fig. 7C were generally fine particles compared to the metal complex hydroxide particles of Experimental Example 1-4 described in Fig. 7A. It was confirmed that the sphericity of the metal complex hydroxide particles of Experimental Example 1-4 in Figs. 7A and 7B was higher than that of the metal complex hydroxide particles of Experimental Example 1-5 in Figs. 7C and 7D.

Next, a positive electrode active materials were prepared using precursors prepared in Experimental Example 1-1, Experimental Example 1-3, Experimental Example 1-4, and Experimental Example 1-6. Lithium ion batteries were prepared using the obtained positive electrode active materials. Experimental Example 2-1 and Experimental Example 2-4 are examples. Experimental Example 2-2, Experimental Example 2-3, Experimental Example 2-5, and Experimental Example 2-6 are reference examples.

### [Experimental Example 2-1]

### (Mixing Process)

The metal complex hydroxide particle obtained in Experimental Example 1-1 and lithium hydroxide were mixed to give a lithium mixture. When mixing, weighing was performed so that the ratio (Li / Me) of the number of atoms of lithium to the total number of atoms of metal other than lithium (that is, nickel, cobalt, manganese, and zirconium) was 1.015.

The weighed materials were thoroughly mixed using a shaker mixer (manufactured by Willy A. Bachofen AG (WAB), TURBULA Type T2C).

### (Firing Process)

The lithium mixture prepared in the mixing process was fired at 930°C for 10 hours in an atmosphere having an oxygen concentration of 85% by volume. By cracking the fired lithium mixture, the positive electrode active material consisting of lithium complex oxide particles was prepared.

Composition analysis of the obtained lithium complex oxide particles; evaluation of average particle diameter D50, and variation amount in particle diameter of the positive electrode active material; measurement of oil absorption amount and XRD pattern; and measurement of amount of eluted lithium and specific surface area, were performed. The evaluation results are given in Table 4.

An enlarged view of the measured XRD pattern is described in Fig. 9. As described in Fig. 9, the (003) diffraction peak of the hexagonal layered structures was observed in the range of 2θ = 18° to 19°, while the (110) diffraction peak of Li₂ZrO₃ was hardly observed.

The resulting positive electrode active material was used to assemble a coin battery and a laminated battery, and the batteries were evaluated. The evaluation results are given in Table 5. In Experimental Example 2-1 to Experimental Example 2-3, the amount of stored gas is represented as a relative value, with the result of Experimental Example 2-3 being 1.00.

### [Experimental Example 2-2]

### (Mixing Process)

The metal complex hydroxide particle obtained in Experimental Example 1-3, lithium hydroxide, and zirconium oxide (ZrO₂) were mixed to give a lithium mixture. When mixing, weighing was performed so that the mole ratio of the total amount of nickel, manganese, and cobalt, and the amount of zirconium in the lithium mixture was 99.5 : 0.5. In addition, weighing was performed so that the ratio (Li / Me) of the number of atoms of lithium to the total number of atoms of metal other than lithium (that is, nickel, cobalt, manganese, and zirconium) was 1.015.

A positive electrode active material consisting almost of lithium complex oxide particles were prepared in the same manner as Experimental Example 2-1, except the above-described condition.

Composition analysis of the obtained lithium complex oxide particles; evaluation of average particle diameter D50, and variation amount in particle diameter of the positive electrode active material; measurement of oil absorption amount and XRD pattern; and measurement of amount of eluted lithium and specific surface area, were performed. The evaluation results are given in Table 4.

An enlarged view of the measured XRD pattern is described in Fig. 9. As described in Fig. 9, the (003) diffraction peak of the hexagonal layered structures in the range of 2θ = 18° to 19°, and the (110) diffraction peak of Li₂ZrO₃ in the range of 2θ = 19.5° to 21.0°, were clearly observed.

The resulting positive electrode active material was used to assemble a coin battery and laminated battery, and the batteries were evaluated. The evaluation results are given in Table 5.

### [Experimental Example 2-3]

A positive electrode active material consisting of lithium complex oxide particles was prepared in the same manner as Experimental Example 2-2, except that the zirconium oxide was not mixed in the mixing process, and the ratio (Li / Me) of the number of atoms of lithium to the total number of atoms of metal other than lithium (that is, nickel, cobalt, and manganese) was 1.015.

Composition analysis of the obtained lithium complex oxide particles; evaluation of average particle diameter D50, and variation amount in particle diameter of the positive electrode active material; measurement of oil absorption amount and XRD pattern; and measurement of amount of eluted lithium and specific surface area, were performed. The evaluation results are given in Table 4.

The resulting positive electrode active material was used to assemble a coin battery and a laminated battery, and the batteries were evaluated. The evaluation results are given in Table 5.

### [Experimental Example 2-4]

### (Mixing process)

The metal complex hydroxide particle obtained in Experimental Example 1-4, and lithium hydroxide were mixed to give a lithium mixture. When mixing, weighing was performed so that the ratio (Li / Me) of the number of atoms of lithium to the total number of atoms of metal other than lithium (that is, nickel, cobalt, manganese, and zirconium) was 1.020.

The weighed materials were thoroughly mixed using a shaker mixer (manufactured by Willy A. Bachofen AG (WAB), TURBULA Type T2C).

### (Firing Process)

The lithium mixture prepared in the mixing process was fired at 820°C for 10 hours in an atmosphere having an oxygen concentration of 92% by volume. By cracking the fired lithium mixture, the positive electrode active material consisting of lithium complex oxide particles was prepared.

Composition analysis of the obtained lithium complex oxide particles; evaluation of average particle diameter D50, and variation amount in particle diameter of the positive electrode active material; measurement of oil absorption amount and XRD pattern; and measurement of amount of eluted lithium and specific surface area, were performed. The evaluation results are given in Table 4.

In the measured XRD pattern, the (003) diffraction peak of the hexagonal layered structures was observed in the range of 2θ = 18° to 19°, while the (110) diffraction peak of Li₂ZrO₃ was hardly observed.

The resulting positive electrode active material was used to assemble a coin battery and a laminated battery, and the batteries were evaluated. The evaluation results are given in Table 5. In Experimental Example 2-4 to Experimental Example 2-6, the amount of stored gas is represented as a relative value, with the result of Experimental Example 2-6 being 1.00.

### [Experimental Example 2-5]

### (Mixing Process)

The metal complex hydroxide particle obtained in Experimental Example 1-6, lithium hydroxide, and zirconium oxide (ZrO₂) were mixed to give a lithium mixture. When mixing, weighing was performed so that the mole ratio of the total amount of nickel, manganese, and cobalt, and the amount of zirconium in the lithium mixture was 99.5 : 0.5. In addition, weighing was performed so that the ratio (Li / Me) of the number of atoms of lithium to the total number of atoms of metal other than lithium (that is, nickel, cobalt, manganese, and zirconium) was 1.020.

A positive electrode active material consisting almost entirely of lithium complex oxide particles was prepared in the same manner as Experimental Example 2-4, except the above-described condition.

Composition analysis of the obtained lithium complex oxide particles; evaluation of average particle diameter D50, and variation amount in particle diameter of the positive electrode active material; measurement of oil absorption amount and XRD pattern; and measurement of amount of eluted lithium and specific surface area, were performed. The evaluation results are given in Table 4.

The resulting positive electrode active material was used to assemble a coin battery and laminated battery, and the batteries were evaluated. The evaluation results are given in Table 5.

### [Experimental Example 2-6]

A positive electrode active material consisting of lithium complex oxide particles was prepared in the same manner as Experimental Example 2-5, except that the zirconium oxide was not mixed in the mixing process, and the ratio (Li / Me) of the number of atoms of lithium to the total number of atoms of metal other than lithium (that is, nickel, cobalt, and manganese) was 1.020.

Composition analysis of the obtained lithium complex oxide particles; evaluation of average particle diameter D50, and variation amount in particle diameter of the positive electrode active material; measurement of oil absorption amount and XRD pattern; and measurement of amount of eluted lithium and specific surface area, were performed. The evaluation results are given in Table 4.

The resulting positive electrode active material was used to assemble a coin battery and a laminated battery, and the batteries were evaluated. The evaluation results are given in Table 5.

**[Table 4]**

| | COMPOSITION | | | | | AVERAGE PARTICLE DIAMETER D50 [*µ*m] | VARIATION AMOUNT IN PARTICLE DIAMETER | OIL ABSORPTION AMOUNT [mL/100g] | XRD | | AMOUNT OF ELUTED LITHIUM [% BY MASS] | SPECIFIC SURFACE AREA [m²/g] |
|---|---|---|---|---|---|---|---|---|---|---|---|---|
| | Ni | Mn | Co | Zr | Li/Me RATIO | | | | I₁/I₂ | DIFFER-ENT PHASE | | |
| | [at.%] | | | | - | | | | | | | |
| EXPERIMENTAL EXAMPLE 2-1 | 54.7 | 24.9 | 19.9 | 0.5 | 1.015 | 13.3 | 0.97 | 16.5 | 0.012 | NONE | 0.050 | 0.34 |
| EXPERIMENTAL EXAMPLE 2-2 | 54.7 | 24.9 | 19.9 | 0.5 | 1.015 | 13.5 | 0.99 | 16.9 | 0.019 | Li₂ZrO₃ | 0.058 | 0.33 |
| EXPERIMENTAL EXAMPLE 2-3 | 55.0 | 25.0 | 20.0 | - | 1.015 | 13.3 | 0.98 | 16.2 | - | NONE | 0.078 | 0.35 |
| EXPERIMENTAL EXAMPLE 2-4 | 84.7 | 9.9 | 4.9 | 0.50 | 1.02 | 12.3 | 0.98 | 18.6 | 0.008 | NONE | 0.098 | 0.26 |
| EXPERIMENTAL EXAMPLE 2-5 | 84.7 | 9.9 | 4.9 | 0.50 | 1.02 | 12.5 | 0.99 | 18.8 | 0.012 | Li₂ZrO₃ | 0.103 | 0.27 |
| EXPERIMENTAL EXAMPLE 2-6 | 85.0 | 10.0 | 5.0 | - | 1.02 | 12.3 | 0.98 | 18.7 | - | NONE | 0.112 | 0.27 |

[Table 5]

| | INITIAL CHARGE CAPACITY [mAh/g] | INITIAL DISCHARGE CAPACITY [mAh/g] | EFFICIENCY [%] | AMOUNT OF STORED GAS (AFTER 1 WEEK) | CAPACITY RETENTION RATE AFTER 500 CYCLES [%] |
|---|---|---|---|---|---|
| EXPERIMENTAL EXAMPLE 2-1 | 194.5 | 174.0 | 89.5 | 0.76 | - |
| EXPERIMENTAL EXAMPLE 2-2 | 194.0 | 173.2 | 89.3 | 0.84 | |
| EXPERIMENTAL EXAMPLE 2-3 | 195.2 | 174.3 | 89.3 | 1.00 | |
| EXPERIMENTAL EXAMPLE 2-4 | 235.0 | 209.9 | 89.3 | 0.86 | 65.3 |
| EXPERIMENTAL EXAMPLE 2-5 | 234.0 | 206.9 | 88.4 | 0.92 | 62.1 |
| EXPERIMENTAL EXAMPLE 2-6 | 235.7 | 210.2 | 89.2 | 1.00 | 60.3 |

From the results described in Tables 4 and 5, it is apparent that the amount of eluted lithium and the amount of stored gas is reduced in the positive electrode active materiale of Experimental Example 2-1 and Experimental Example 2-2, in which zirconium is contained, in comparison to the positive electrode active material of Experimental Example 2-3, in which no zirconium is contained.

In particular, it is confirmed that the amount of stored gas is particularly reduced in the positive electrode active material of Experimental Example 2-1, in which the ratio (I₂ / I₁) of the integrated intensity (I₂) of the diffraction peak of Li₂ZrO₃ to the integrated intensity (I₁) of the (003) diffraction peak of the hexagonal layered structure is 0.015 or less, in comparison to Experimental Example 2-2 and Experimental Example 2-3.

From the results described in Table 5, it is confirmed that the amount of stored gas is further reduced in the positive electrode active material of Experimental Example 2-1, in which zirconium is contained, in comparison to the positive electrode active material of Experimental Example 2-2, in which zirconium is added in the mixing process.

Similar results are obtained in Experimental Example 2-4 to Experimental Example 2-6.

Specifically, from the results described in Tables 4 and 5, it is confirmed that the amount of eluted lithium is reduced, the capacity retention rate after the 500 cycles is improved, and the amount of stored gas is decreased, in the positive electrode active material of Experimental Example 2-4 and Experimental Example 2-5, in which zirconium is contained, in comparison to the positive electrode active material of Experimental Example 2-6, in which no zirconium is contained.

In particular, it is confirmed that the amount of stored gas is particularly decreased in the positive electrode active material of Experimental Example 2-4, in which the ratio (I₂ / I₁) of the integrated intensity (I₂) of the diffraction peak of Li₂ZrO₃ to the integrated intensity (I₁) of the (003) diffraction peak of the hexagonal layered structure is 0.010 or less, in comparison to other Experimental Examples.

From the results described in Table 5, it is confirmed that the capacity retention rate after the 500 cycles is further improved, and the amount of stored gas is further decreased, in the positive electrode active material of Experimental Example 2-4 in which zirconium is contained, in comparison to the positive electrode active material of Experimental Example 2-5 in which zirconium is added in the mixing process.

The positive-electrode active material precursor for lithium-ion secondary battery, the positive-electrode active material for lithium-ion secondary battery, the method of manufacturing positive-electrode active material precursor for lithium-ion secondary battery, the method of manufacturing positive-electrode active material for lithium-ion secondary battery, and the lithium-ion secondary battery have been described above in the embodiments and examples. The present invention is not limited to the above embodiments and examples. Various modifications and changes are possible within the scope of the present invention described in the claims.

The present application claims the priority to Japanese Patent Application No. 2019-103126, filed on May 31, 2019, Japanese Patent Application No. 2019-120374 filed on June 27, 2019, and Japanese Patent Application No. 2019-189540, filed on October 16, 2019, with the Japanese Patent Office, the entire contents of which are hereby incorporated by reference.

## Claims

1. A positive-electrode active material precursor for a lithium-ion secondary battery, the positive-electrode active material precursor comprising:
a metal complex hydroxide particle,
wherein the metal complex hydroxide particle includes nickel (Ni), manganese (Mn), zirconium (Zr), and an additive element M (M) in a mole ratio of Ni:Mn:Zr:M = a:b:c:d such that a, b, c, and d satisfy following conditions: 0.10 ≤ a ≤ 0.98, 0.01 ≤ b ≤ 0.50, 0.0003 ≤ c ≤ 0.02, 0.01 ≤ d ≤ 0.50, and a + b + c + d = 1, and the additive element M is one or more elements selected from Co, W, Mo, V, Mg, Ca, Al, Ti, and Ta, and
wherein the metal complex hydroxide particle exhibits, when a linear analysis is performed by Energy Dispersive X-ray Spectrometry (EDX) on a cross section of the metal complex hydroxide particle along a direction of diameter from a center, a ratio of a maximum zirconium concentration to an average zirconium concentration of 2 or less.

2. The positive-electrode active material precursor according to claim 1, wherein an average particle diameter D50 is 8 µm or more and 20 µm or less.

3. A positive-electrode active material for a lithium-ion secondary battery, the positive-electrode active material comprising:
a lithium complex oxide particle,
wherein the lithium complex oxide particle includes lithium (Li), nickel (Ni), manganese (Mn), zirconium (Zr), and an additive element M (M) in a mole ratio of Li:Ni:Mn:Zr:M = x:a:b:c:d such that x, a, b, c, and d satisfy following conditions: 0.95 ≤ x ≤ 1.20, 0.10 ≤ a < 0.70, 0.01 ≤ b ≤ 0.50, 0.0003 ≤ c ≤ 0.02, 0.01 ≤ d ≤ 0.50, and a + b + c + d = 1, and the additive element M is one or more elements selected from Co, W, Mo, V, Mg, Ca, Al, Ti, and Ta, and
wherein the lithium complex oxide particle exhibits, in an XRD measurement of the lithium complex oxide particle, a ratio (I₂ / I₁) of an integrated intensity (I₂) of a diffraction peak of Li₂ZrO₃ to an integrated intensity (I₁) of a (003) diffraction peak of a hexagonal layered structure of 0.015 or less.

4. The positive-electrode active material according to claim 3, wherein an oil absorption amount is 13 ml/100g or more and 19 ml/100g or less.

5. The positive-electrode active material according to claim 3 or 4, wherein an amount of an eluted lithium evaluated by a Warder method is 0.06% by mass or less.

6. A positive-electrode active material for a lithium-ion secondary battery, the positive-electrode active material comprising:
a lithium complex oxide particle,
wherein the lithium complex oxide particle includes lithium (Li), nickel (Ni), manganese (Mn), zirconium (Zr), and an additive element M (M) in a mole ratio of Li:Ni:Mn:Zr:M = x:a:b:c:d such that x, a, b, c, and d satisfy following conditions: 0.95 ≤ x ≤ 1.20, 0.70 ≤ a ≤ 0.98, 0.01 ≤ b ≤ 0.20, 0.0003 ≤ c ≤ 0.02, 0.01 ≤ d ≤ 0.20, and a + b + c + d = 1, and the additive element M is one or more elements selected from Co, W, Mo, V, Mg, Ca, Al, Ti, and Ta, and
wherein the lithium complex oxide particle exhibits, in an XRD measurement of the lithium complex oxide particle, a ratio (I₂ / I₁) of an integrated intensity (I₂) of a diffraction peak of Li₂ZrO₃ to an integrated intensity (I₁) of a (003) diffraction peak of a hexagonal layered structure of 0.010 or less.

7. The positive-electrode active material according to claim 6, wherein an oil absorption amount is 15 ml/100g or more and 21 ml/100g or less.

8. The positive-electrode active material according to claim 6 or 7, wherein an amount of an eluted lithium evaluated by a Warder method is 0.11% by mass or less.

9. A method of manufacturing positive-electrode active material precursor for a lithium-ion secondary battery, the positive-electrode active material precursor including a metal complex hydroxide particle comprising:
crystallizing a particle of metal complex hydroxide that includes nickel (Ni), manganese (Mn), zirconium (Zr), and an additive element M (M) in a mole ratio of Ni:Mn:Zr:M = a:b:c:d such that a, b, c, and d satisfy following conditions: 0.10 ≤ a ≤ 0.98, 0.01 ≤ b ≤ 0.50, 0.0003 ≤ c ≤ 0.02, 0.01 ≤ d ≤ 0.50, and a + b + c + d = 1, and the additive element M is one or more elements selected from Co, W, Mo, V, Mg, Ca, Al, Ti, and Ta, by a crystallization method,
wherein in the crystallizing, an aqueous solution containing zirconium salt used to supply zirconium has a pH of less than 1.

10. A method of manufacturing positive-electrode active material for lithium-ion secondary battery comprising:
mixing a lithium compound with the positive-electrode active material precursor for lithium-ion secondary battery obtained by the method of manufacturing the positive-electrode active material precursor for lithium-ion secondary battery according to claim 9, to prepare a mixture of materials including lithium (Li), nickel (Ni), manganese (Mn), zirconium (Zr), and an additive element M (M) in a mole ratio of Li:Ni:Mn:Zr:M = x:a:b:c:d such that x, a, b, c, and d satisfy following conditions: 0.95 ≤ x ≤ 1.20, 0.10 ≤ a < 0.70, 0.01 ≤ b ≤ 0.50, 0.0003 ≤ c ≤ 0.02, 0.01 ≤ d ≤ 0.50, and a + b + c + d = 1, and the additive element M is one or more elements selected from Co, W, Mo, V, Mg, Ca, Al, Ti, and Ta, and
firing the mixture of materials at a temperature of 760°C or more and 980°C or less under an oxygen-containing atmosphere having an oxygen concentration of 70% by volume or more and 97% by volume or less.

11. A method of manufacturing positive-electrode active material for lithium-ion secondary battery comprising:
mixing a lithium compound with the positive-electrode active material precursor for lithium-ion secondary battery obtained by the method of manufacturing the positive-electrode active material precursor for lithium-ion secondary battery according to claim 9, to prepare a mixture of materials including lithium (Li), nickel (Ni), manganese (Mn), zirconium (Zr), and an additive element M (M) in a mole ratio of Li:Ni:Mn:Zr:M = x:a:b:c:d such that x, a, b, c, and d satisfy following conditions: 0.95 ≤ x ≤ 1.20, 0.70 ≤ a ≤ 0.98, 0.01 ≤ b ≤ 0.20, 0.0003 ≤ c ≤ 0.02, 0.01 ≤ d ≤ 0.20, and a + b + c + d = 1, and the additive element M is one or more elements selected from Co, W, Mo, V, Mg, Ca, Al, Ti, and Ta, and
firing the mixture of materials at a temperature of 740°C or more and 900°C or less under an oxygen-containing atmosphere having an oxygen concentration of 80% by volume or more and 100% by volume or less.

12. A lithium-ion secondary battery comprising:
a positive electrode including the positive-electrode active material for lithium-ion secondary battery according to any one of claims 3 to 8 .
